# EUROPEAN PATENT APPLICATION

(11) **EP 4 651 555 A1**
(43) Date of publication of application: **19.11.2025**
(21) Application number: 23915293.7
(22) Date of filing: 10.01.2023
(51) Int. Cl.: H04W 28/02

(54) **WIRELESS COMMUNICATION METHOD, AND DEVICES**

(71) Applicant: GUANGDONG OPPO MOBILE TELECOMMUNICATIONS CORP., LTD., Dongguan, Guangdong 523860 (CN)
(72) Inventor: ZHONG, Yi, Dongguan, Guangdong 523860 (CN); HUANG, Zhenzhen, Dongguan, Guangdong 523860 (CN); LU, Liuming, Dongguan, Guangdong 523860 (CN); LI, Yapu, Dongguan, Guangdong 523860 (CN)
(74) Representative: RGTH
(86) International application number: PCT/CN2023/071654
(87) International publication number: WO 2024/148516

(57) **Abstract**

Provided in the present application are a wireless communication method, and devices. An AP MLD can determine TID-to-link mapping information by means of a first network model, such that TID-To-Link Mapping can be accurately and efficiently established. The wireless communication method comprises: an AP MLD determining TID-to-link mapping information by means of a first network model; wherein the TID-to-link mapping information is used for indicating a link mapped by each TID among a plurality of TIDs.

## Description

### TECHNICAL FIELD

Embodiments of the present disclosure relate to the field of communications, and in particular, to a wireless communication method, and devices.

### BACKGROUND

A traffic identifier (TID)-to-link mapping relationship (TID-To-Link Mapping) is introduced in Wireless Fidelity (WiFi), to improve data transmission efficiency. TID-To-Link Mapping is implemented based on a negotiation mechanism, and to complete the establishment of TID-To-Link Mapping between multi-link devices, at least one request-response process needs to be performed, and the negotiation efficiency is low because a multi-link device on a sending end and a multi-link device on a receiving end simply send a TID-To-Link Mapping request and response, but what is the requirement for TID-To-Link Mapping on the receiving end is not known on the sending end, which is not conducive to quickly establishing TID-To-Link Mapping between the multi-link device on the sending end and the multi-link device on the receiving end. Therefore, how to accurately and efficiently establish TID-To-Link Mapping is a problem that needs to be solved.

### SUMMARY

The present disclosure provides a wireless communication method, and devices, and an AP MLD may determine TID-to-link mapping information via a first network model, so that TID-To-Link Mapping may be established accurately and efficiently.

In a first aspect, a wireless communication method is provided, and includes:
determining, by an AP MLD, TID-to-link mapping information via a first network model;
where the TID-to-link mapping information is used to indicate a link to which each TID of multiple TIDs is mapped.

In a second aspect, a wireless communication method is provided, and includes:
receiving first information by a Non-AP MLD;
where the first information includes TID-to-link mapping information, the TID-to-link mapping information is used to indicate a link to which each TID of multiple TIDs is mapped, the multiple TIDs at least include a TID corresponding to a traffic to be transmitted by the Non-AP MLD, and the TID-to-link mapping information is determined by an AP MLD via a first network model.

In a third aspect, a terminal device is provided, and is configured to perform the method in the above first aspect or its various implementations.

Specifically, the terminal device includes a functional module, which is configured to perform the method in the above first aspect or its various implementations.

In a fourth aspect, a network device is provided, and is configured to perform the method in the above second aspect or its various implementations.

Specifically, the network device includes a functional module, which is configured to perform the method in the above second aspect or its various implementations.

In a fifth aspect, a terminal device is provided, and includes a processor and a memory. The memory is configured to store a computer program, and the processor is configured to call and run the computer program stored in the memory, to perform the method in the above first aspect or its various implementations.

In a sixth aspect, a network device is provided, and includes a processor and a memory. The memory is configured to store a computer program, and the processor is configured to call and run the computer program stored in the memory, to perform the method in the above second aspect or its various implementations.

In a seventh aspect, a chip is provided, and is configured to implement the method according to any one of the above first aspect to the above second aspect or their various implementations.

Specifically, the chip includes: a processor, which is configured to call and run a computer program from a memory, so that a device equipped with the apparatus performs the method according to any one of the above first aspect to the above second aspect or their various implementations.

In an eighth aspect, a computer-readable storage medium is provided, and is configured to store a computer program, where the computer program enables a computer to perform the method according to any one of the above first aspect to the above second aspect or their various implementations.

In a ninth aspect, a computer program product is provided, and includes computer program instructions, where the computer program instructions enable a computer to perform the method according to any one of the above first aspect to the above second aspect or their various implementations.

In a tenth aspect, a computer program is provided, and when being executed on a computer, enables the computer to perform the method according to any one of the above first aspect to the above second aspect or their various implementations.

Through the above technical solutions, the AP MLD may determine the TID-to-link mapping information via the first network model, so that TID-To-Link Mapping may be established accurately and efficiently.

### BRIEF DESCRIPTION OF THE DRAWINGS

FIG. 1 is a schematic diagram of a communication system architecture provided in the embodiments of the present disclosure.
FIG. 2 is a schematic diagram of a wireless communication method provided according to the embodiments of the present disclosure.
FIG. 3 is a schematic diagram of a network structure in which an AP MLD determines TID-to-link mapping information via a first network model provided according to the embodiments of the present disclosure.
FIG. 4 is a schematic diagram of a first network model provided according to the embodiments of the present disclosure.
FIG. 5 is a schematic diagram of a multi-link communication between an AP MLD and a Non-AP MLD provided according to the embodiments of the present disclosure.
FIG. 6 is a schematic diagram of a BSR control field provided according to the embodiments of the present disclosure.
FIG. 7 is a schematic diagram of a QoS feature element provided according to the embodiments of the present disclosure.
FIG. 8 is a schematic diagram of a multi-link element provided according to the embodiments of the present disclosure.
FIG. 9 is a schematic diagram of a traffic stream transmission provided according to the embodiments of the present disclosure.
FIG. 10 is a schematic diagram of another traffic stream transmission provided according to the embodiments of the present disclosure.
FIG. 11 is a schematic diagram of a prediction procedure for delay sensitive traffic stream to multi-link mapping provided according to the embodiments of the present disclosure.
FIG. 12 is a schematic diagram of a prediction procedure for non-delay sensitive traffic stream to multi-link mapping provided according to the embodiments of the present disclosure.
FIG. 13 is a schematic diagram of model prediction and model update provided according to the embodiments of the present disclosure.
FIG. 14 is a schematic diagram of a signaling interaction of a single AP MLD to a single Non-AP MLD provided according to the embodiments of the present disclosure.
FIG. 15 is a schematic diagram of a signaling interaction of a single AP MLD to multiple Non-AP MLDs provided according to the embodiments of the present disclosure.
FIG. 16 is a schematic diagram of another wireless communication method provided according to the embodiments of the present disclosure.
FIG. 17 is a schematic block diagram of an AP MLD provided according to the embodiments of the present disclosure.
FIG. 18 is a schematic block diagram of a Non-AP MLD provided according to the embodiments of the present disclosure.
FIG. 19 is a schematic block diagram of a communication device provided according to the embodiments of the present disclosure.
FIG. 20 is a schematic block diagram of an apparatus provided according to the embodiments of the present disclosure.
FIG. 21 is a schematic block diagram of a communication system provided according to the embodiments of the present disclosure.

### DETAILED DESCRIPTION

The technical solutions in the embodiments of the present disclosure will be described below in conjunction with the drawings in the embodiments of the present disclosure, and obviously, the described embodiments are only part of the embodiments of the present disclosure, rather than all of the embodiments. With respect to the embodiments in the present disclosure, all other embodiments obtained by those ordinary skilled in the art without making any creative work shall fall within the scope of protection of the present disclosure.

The technical solutions of the embodiments of the present disclosure may be applied to various communication systems, such as: wireless local area network (Wireless Local Area Networks, WLAN), wireless fidelity (Wireless Fidelity, WiFi) or other communication systems, etc.

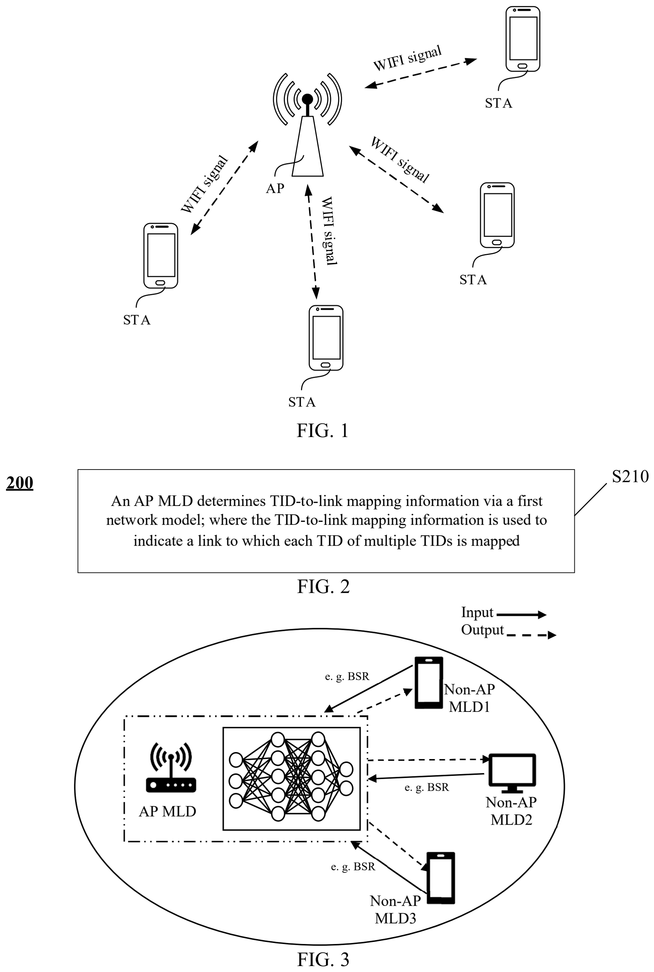

Please refer to FIG. 1, it shows a schematic diagram of a wireless communication system provided in an embodiment of the present disclosure. As shown in FIG. 1, the wireless communication system may include: an access point (AP) and stations (STAs).

In some scenarios, the AP may be referred to as an AP STA, that is, in a sense, the AP is also an STA. In some scenarios, the STA is also referred to as a non-AP STA.

In some embodiments, the STA may include an AP STA and a non-AP STA. The communication in the communication system may be a communication between an AP and a non-AP STA, a communication between a non-AP STA and a non-AP STA, or a communication between an STA and a peer STA. The peer STA may refer to a device that communicates with the STA peer-to-peer. For example, the peer STA may be an AP or a non-AP STA.

The AP is equivalent to a bridge for connecting a wired network and a wireless network, a main function thereof is to connect various wireless network clients together and then connect the wireless network to Ethernet. An AP device may be a terminal device (such as a mobile phone) or a network device (such as a router) with a wireless fidelity (Wireless-Fidelity, WiFi) chip.

It should be understood that the role of STA in the communication system is not absolute, and for example, in some scenarios, when a mobile phone is connected to a router, the mobile phone is a non-AP STA; and in a case where the mobile phone serves as a hotspot for other mobile phones, the mobile phone plays the role of an AP.

The AP and non-AP STA may be devices applied in the Internet of Vehicles, Internet of Things nodes and sensors in the Internet of Things (IoT), smart cameras, smart remote controls, smart water and electricity meters in smart homes, and sensors in smart cities, etc.

In some embodiments, the non-AP STA may support the 802.1 The standard. The non-AP STA may also support various current and future 802.11 families' wireless local area network standards, such as 802.11ax, 802.11ac, 802.11n, 802.11g, 802.11b and 802.11a, etc.

In some embodiments, the AP may be a device supporting the 802.11be standard. The AP may also be a device that supports various current and future 802.11 families' WLAN standards, such as 802.11ax, 802.11ac, 802.11n, 802.11g, 802.11b and 802.11a, etc.

In the embodiments of the present disclosure, the STA may be a mobile phone, a tablet computer (Pad), a computer, a virtual reality (Virtual Reality, VR) device, an augmented reality (Augmented Reality, AR) device, a wireless device in industrial control, a set-top box, a wireless device in self-driving, a vehicle-mounted communication device, a wireless device in remote medical, a wireless device in smart grid, a wireless device in transportation safety, a wireless device in a smart city, or a wireless device in a smart home, a wireless communication chip, an application specific integrated circuit (Application Specific Integrated Circuit, ASIC), a system on chip (System on Chip, SOC), etc., that supports WLAN/WIFI technologies.

Frequency bands that can be supported by the WLAN technology may include but be not limited to: low frequency bands (2.4 GHz, 5 GHz, 6 GHz) and high frequency bands (45 GHz, 60 GHz).

There is one or more links between the station and the access point. In some embodiments, the station and the access point support multi-band communications. For example, the communication is performed simultaneously on 2.4 GHz, 5 GHz, 6 GHz, 45 GHz, and 60 GHz frequency bands, or the communication is performed simultaneously on different channels of a same frequency band (or different frequency bands), which improves the communication throughput and/or reliability between the devices. This device is usually referred to as a multi-band device, or a multi-link device (Multi-Link Device, MLD), and is sometimes also referred to as a multi-link entity or a multi-band entity. A multi-link device may be an access point device or a station device. If the multi-link device is an access point device, the multi-link device includes one or more APs; and if the multi-link device is a station device, the multi-link device includes one or more non-AP STAs.

A multi-link device including one or more APs may be referred to as an access point multi-link device (Access Point Multi-Link Device, AP MLD), and a multi-link device including one or more non-AP STAs may be referred to as a non access point multi-link device (Non Access Point Multi-Link Device, Non-AP MLD).

In the embodiments of the present disclosure, an AP may include multiple APs, a Non-AP may include multiple STAs, multiple links may be formed between the APs in the AP and the STAs in the Non-AP, and a data communication may be performed between an AP in the AP and a corresponding STA in the Non-AP via a corresponding link.

The AP is a device deployed in the wireless local area network to provide a wireless communication function for STAs. A station may include: a user equipment (UE), an access terminal, a user unit, a user station, a mobile station, a mobile site, a remote station, a remote terminal, a mobile device, a wireless communication device, a user agent or a user apparatus. Optionally, the station may also be a cellular phone, a cordless phone, a measurement initiation protocol (Session Initiation Protocol, SIP) phone, a wireless local loop (Wireless Local Loop, WLL) station, a personal digital assistant (Personal Digital Assistant, PDA), a handheld device with a wireless communication function, a computing device, or other processing device, a vehicle-mounted device, or a wearable device, that is connected to a wireless modem, which is not limited in the embodiments of the present disclosure.

Optionally, both the station and the access point support the IEEE 802.11 standard.

It should be understood that the terms "system" and "network" here are often used interchangeably herein. The term "and/or" herein is merely a description for an association relationship of associated objects, indicating that three relationships may exist, and for example, A and/or B may mean three cases where: A exists alone, both A and B exist, and B exists alone. In addition, the character "/" herein generally indicates that the associated objects before and after "/" are in an "or" relationship.

It should be understood that the "indication" and its variations mentioned in the embodiments of the present disclosure may be a direct indication, an indirect indication, or may represent an associated relationship. For example, A indicates B, which may mean that A directly indicates B, for example, B may be acquired through A; it may also mean that A indirectly indicates B, for example, A indicates C, and B may be acquired through C; it may also mean that there is an association relationship between A and B.

The terms used in the implementation section of the present disclosure are only used to explain the specific embodiments of the present disclosure, and are not intended to limit the present disclosure. The terms "first", "second", "third", "fourth" or the like in the specification, claims and drawings of the present disclosure are used to distinguish different objects, rather than to describe a specific order. In addition, the terms "include/comprise", "have", and any variations thereof, are intended to cover a non-exclusive inclusion.

In the description of the embodiments of the present disclosure, the term "corresponding/correspondence" and its variations may indicate a direct corresponding relationship or indirect corresponding relationship between two items, or an association relationship between two items, or a relationship between indicating and being indicated, between configuring and being configured, or the like.

In the embodiments of the present disclosure, "pre-definition" or "pre-configuration" or its variations may be implemented by pre-storing corresponding codes, tables or other methods that may be used to indicate related information in a device (e.g., including the STA and network device), and the present disclosure does not limit its specific implementation. For example, the pre-definition may refer to being defined in a protocol.

In the embodiments of the present disclosure, the "protocol" may refer to a standard protocol in the communication field, for example, it may include a WiFi protocol and related protocols applied in future WiFi communication systems, which is not limited in the present disclosure.

To facilitate understanding of the technical solutions of the embodiments of the present disclosure, the problems solved by the present disclosure are described below.

The enhanced distributed channel access (EDCA) mechanism of WiFi cannot strictly guarantee to meet transmission requirements of a low delay traffic, due to the use of a contention-based channel access method; while the hybrid coordination function (HCF) controlled channel access (HCF controlled channel access, HCCA) is much less reliable and robust once the data transmission is interfered by the overlapping basic service set (OBSS) or the like, and is less widely applied. Currently, multi-link technologies have problems such as insufficient flexibility and great restrictions. Specifically, the TID-to-link mapping association (TID-To-Link Mapping) is based on a negotiation mechanism, and to complete the establishment of the mapping relationship of traffic identifiers to multiple links between multi-link devices, at least one request-response process needs to be performed, and the negotiation efficiency is low because a multi-link device on a sending end and a multi-link device on a receiving end simply send a TID-To-Link Mapping request and response, but what is the requirement for TID-To-Link Mapping of the multi-link device on the receiving end is not known for the multi-link device on the sending end, which is not conducive to quickly establishing TID-To-Link Mapping between the multi-link device on the sending end and the multi-link device on the receiving end. Furthermore, due to the characteristics of burst traffic streams arrived periodically of delay sensitive traffic streams, the negotiation mechanism cannot ensure the prioritized transmission of a delay sensitive data frame timely according to the current network environment.

Based on the above problems, the present disclosure proposes a solution for establishing TID-To-Link Mapping, where the AP MLD may determine the TID-to-link mapping information via the first network model, so that the TID-To-Link Mapping may be established accurately and efficiently. Specifically, the first network model (such as an AI/ML model) is deployed on the AP MLD end, and the AP MLD performs data collection, model training and inference, to predict a optimal link set for delay sensitive traffic streams or non-delay sensitive traffic streams, and uses a beacon frame/association request frame/probe request frame to broadcast and deploy the TID-To-Link Mapping Element predicted by the first network model (such as the AI/ML model) to part or all of Non-AP MLDs associated with the AP MLD, thereby completing the mapping of delay sensitive traffic streams and/or non-delay sensitive traffic streams to multiple links, which may improve the mapping efficiency and accuracy of TIDs to links, and may optimize the transmission of delay sensitive traffic streams and/or non-delay sensitive traffic streams. For example, for the rapidly changing link information and the low delay requirement of delay sensitive traffic streams, a link mapping scheme is deployed in real time for the delay sensitive traffic streams, to ensure that each generated delay sensitive traffic stream may be transmitted timely, thereby improving the low delay performance of the delay sensitive traffic. Furthermore, when the low delay performance generated by a predicted link mapping scheme reaches an expected effect, the predicted link mapping scheme is the optimal delay sensitive traffic identifier to multi-link mapping scheme at the current moment.

To facilitate understanding of the technical solutions of the embodiments of the present disclosure, the technical solutions of the present disclosure are described in detail below through specific embodiments. The following related technologies may be, as optional solutions, arbitrarily combined with the technical solutions of the embodiments of the present disclosure, which all belong to the protection scope of the embodiments of the present disclosure. The embodiments of the present disclosure include at least part of the following contents.

FIG. 2 is a schematic diagram of a wireless communication method 200 according to the embodiments of the present disclosure. As shown in FIG. 2, the wireless communication method 200 may include at least part of the following contents:
S210: an AP MLD determines TID-to-link mapping information via a first network model; where the TID-to-link mapping information is used to indicate a link to which each TID of multiple TIDs is mapped.

In the embodiments of the present disclosure, since the AP MLD has a global perspective of the network, it may control its associated Non-AP MLDs, and for example, the AP MLD acquires input data of the first network model from one or more its associated Non-AP MLDs. Therefore, the AP MLD side may deploy the first network model, and the AP MLD may perform data collection, model training, and prediction of the TID-to-link mapping relationship (TID-To-Link Mapping). The AP MLD may determine a transmission link set/transmission scheme for a delay sensitive traffic stream and/or a non-delay sensitive traffic stream based on the predicted TID-To-Link Mapping, and/or the Non-AP MLD associated with the AP MLD may determine a transmission link set/transmission scheme for a delay sensitive traffic stream and/or a non-delay sensitive traffic stream based on the predicted TID-To-Link Mapping.

In some embodiments, a network structure in which the AP MLD determines the TID-to-link mapping information via the first network model may be shown in FIG. 3, where the AP MLD acquires input data (such as a buffer status report (BSR)) of the first network model from its associated Non-AP MLD 1, Non-AP MLD 2, and Non-AP MLD 3, the AP MLD determines the TID-to-link mapping information via the first network model, and the AP MLD may implement the TID-to-link mapping corresponding to the traffic to be transmitted based on the TID-to-link mapping information; and the AP MLD may send or indicate the predicted TID-to-link mapping information to the Non-AP MLD associated with the AP MLD, such as the AP MLD sends or indicates the predicted TID-to-link mapping information to the Non-AP MLD associated with the AP MLD through a TID-To-Link Mapping Element, so that the Non-AP MLD associated with the AP MLD may implement the TID-to-link mapping corresponding to the traffic to be transmitted based on the TID-to-link mapping information.

In some embodiments, the first network model may be an artificial intelligence (AI)/machine learning (ML) model. Specifically, the first network model may be a deep neural network (DNN), a convolutional neural network (CNN), a recurrent neural network (RNN), etc., which is not limited in the present disclosure.

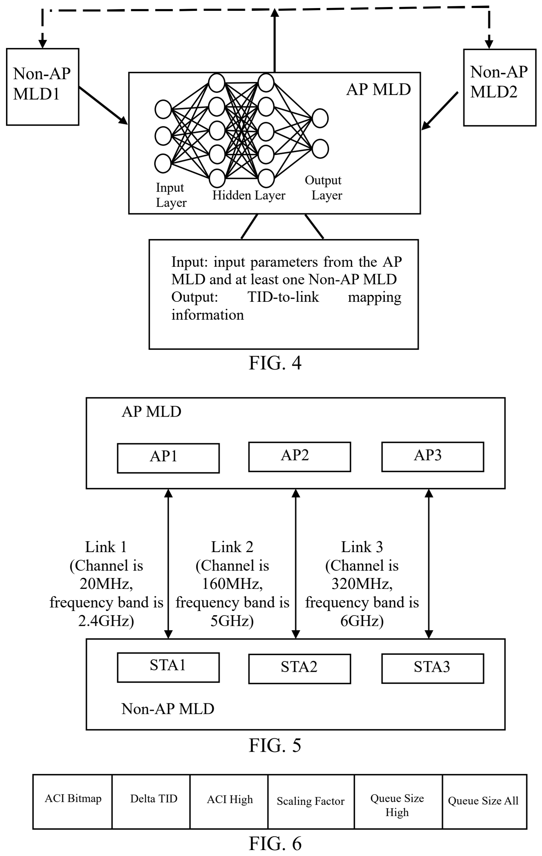

In some embodiments, the first network model may include an input layer, a hidden layer, and an output layer, as shown in FIG. 4. The input of the input layer is input parameters from the AP MLD and at least one Non-AP MLD, the input layer transfer the input parameters to the hidden layer, the number of hidden layers may be adaptively adjusted according to network conditions, and the hidden layer performs a calculation and transfers a calculation result to the output layer, and the output is the TID-To-Link Mapping at the current moment. For the delay sensitive traffic stream, whether the TID-To-Link Mapping predicted at the current moment is the optimal link mapping scheme may be determined by comparing with an ideal delay.

In some embodiments, the AP MLD may include a data collection module, and the data collection module may be a function that provides input data for model training and model inference. The data collection module does not perform an AI/ML algorithm-specific data preparation (such as data pre-processing and cleaning, formatting, and conversion). Optionally, the input data of the first network model may include measurement values from the Non-AP MLD(s) and/or the AP MLD, feedback from the Non-AP MLD(s), and historical output data from the first network model.

In some embodiments, the multiple TIDs include at least one of: a TID corresponding to a traffic to be transmitted by at least one Non-AP MLD associated with the AP MLD, or a TID corresponding to a traffic to be transmitted by the AP MLD.

Optionally, the TID corresponding to the traffic to be transmitted by the at least one Non-AP MLD included in the multiple TIDs may be part or all of TIDs corresponding to the traffic to be transmitted by the at least one Non-AP MLD, and/or, the TID corresponding to the traffic to be transmitted by the AP MLD included in the multiple TIDs may be part or all of TIDs corresponding to the traffic to be transmitted by the AP MLD.

In some embodiments, the multiple TIDs are TIDs corresponding to a delay sensitive traffic, or the multiple TIDs are TIDs corresponding to a non-delay sensitive traffic.

That is, in the embodiments of the present disclosure, the AP MLD determines the TID-to-link mapping information corresponding to the delay sensitive traffic via the first network model, or the AP MLD determines the TID-to-link mapping information corresponding to the non-delay insensitive traffic via the first network model.

It should be noted that the TID corresponding to the delay sensitive traffic may also be referred to as a delay sensitive traffic stream, and the TID corresponding to the non-delay sensitive traffic may also be referred to as a non-delay sensitive traffic stream.

In some embodiments, the AP MLD may re-train the first network model according to a third period. That is, the AP MLD may periodically re-train the first network model, to guarantee the prediction performance of the first network model.

Optionally, the third period is determined based on network load information and/or channel occupancy information. Optionally, the third period is agreed upon by a protocol, or the third period is determined by the AP MLD.

In some embodiments, in a case where a new delay sensitive traffic arrives and/or in a case where network load and/or channel occupancy changes, the AP MLD re-trains the first network model, or the AP MLD switches from the first network model to another network model that implements the same function as the first network model.

That is, in a case where the network environment changes (such as a new delay sensitive traffic arrives, network load and/or channel occupancy changes, etc.), the AP MLD re-trains the first network model, or the AP MLD switches from the first network model to another network model that implements the same function as the first network model, to ensure the prediction performance of the network model.

In some embodiments, in a case where the AP MLD is associated with only one Non-AP MLD, an association relationship between the AP MLD and the Non-AP MLD may be shown in FIG. 5, where affiliated AP1 of the AP MLD is connected to affiliated STA1 of the Non-AP MLD via link 1 (with a channel of 20 MHz, and a frequency band of 2.4 GHz), affiliated AP2 of the AP MLD is connected to affiliated STA2 of the Non-AP MLD via link 2 (with a channel of 160 MHz, and a frequency band of 5 GHz), and affiliated AP3 of the AP MLD is connected to affiliated STA3 of the Non-AP MLD via link 3 (with a channel of 320 MHz, and a frequency band of 6 GHz). Specifically, for example, as shown in Table 1, a real-time traffic/delay sensitive traffic stream appears at a time interval of 10 ms, when a new periodic delay sensitive traffic stream (such as TID 0 to TID 3) and a non-delay sensitive traffic stream (such as TID 4 to TID 7) arrive. In this embodiment, a mean transmission delay < 11ms is regarded as a delay sensitive traffic stream, where the delay sensitive traffic stream accounts for 80% of the total traffic stream to be transmitted. Furthermore, in this embodiment, the non-delay sensitive TID has a requirement for high throughput. In order to ensure the timely delivery of a large number of delay sensitive data frames, the first network model deployed at the AP MLD end receives input information from the AP MLD and the Non-AP MLD, and outputs the TID-To-Link Mapping at the current moment. AP MLD formulates a link mapping scheme for the traffic streams based on the TID-To-Link Mapping at the current moment, and maps the delay sensitive traffic stream (TID 0 to TID 3) to one or more high-quality (low-channel occupancy/small-link load) links (such as link 1 and link 2) for transmitting, by link mapping parameters, and maps the non-delay sensitive traffic stream (TID 4 to TID 7) to link 3. Since the link conditions will change with the change of the network environment, in a case where the delay sensitive traffic (delay sensitive traffic stream) of the next period arrives and the delay sensitive traffic stream of the previous period has not been transmitted completely, it is necessary to re-formulate a link mapping scheme for the newly arrived delay sensitive traffic stream. The first network model completes link mapping for the delay sensitive traffic stream of the new period according to the predicted new TID-To-Link Mapping based on the network access information, without suspending the transmission of the previous round of delay sensitive traffic stream. Through the first network model, the link mapping scheme can be updated in time, to ensure that each round of newly arriving delay sensitive traffic can be mapped to the optimal link for transmitting, and the non-delay sensitive traffic stream can achieve its requirement for throughput.

**Table 1**

| TID | Delay Bound (ms) | Mean Date Rate (bps) |
|---|---|---|
| 0 | 10 | 35K |
| 1 | 8 | 10K |
| 2 | 5 | 60K |
| 3 | 9 | 42K |
| 4 | - | 120M |
| 5 | - | 320M |
| 6 | - | 280M |
| 7 | - | 450M |

In the embodiments of the present disclosure, since the AP MLD has a global perspective, the AP MLD formulates a link mapping scheme (TID-To-Link Mapping) for all traffic streams to be transmitted, that is, allocates transmission links for delay sensitive traffic streams and non-delay sensitive traffic streams. The first network model acquires the measurement values of related Non-AP MLD(s) and the AP MLD in the current network environment based on machine learning, predicts link qualities of multiple links, and outputs TID-To-Link Mapping. Due to the variability of the network environment and the periodic characteristic of the sudden arrival of the delay sensitive traffic, the link quality of the same link also changes accordingly. The TID-To-Link Mapping scheme may be dynamically planned according to the predicted delay requirement of the delay sensitive traffic stream and other parameters in the network environment, to provide link mapping configuration for multiple Non-AP MLDs, thereby ensuring the timely delivery of delay sensitive data frames and the throughput requirement for non-delay sensitive data frames. Optionally, the Non-AP MLD sends a TID-To-Link Mapping request to the AP MLD, and the AP MLD receives the request and carries the TID-To-Link Mapping in a TID-To-Link Mapping response. Optionally, if the gain determined by the TID-To-Link Mapping meets a requirement (e.g., the mean arrival delay < 5 ms), the TID-To-Link Mapping is the optimal TID-To-Link Mapping, otherwise, additional optimization is performed (e.g., the model inference step is re-performed).

In some embodiments, in a case where the multiple TIDs are TIDs corresponding to the delay sensitive traffic, the above S210 may specifically include:
the AP MLD inputs a first dataset into the first network model, which outputs the TID-To-Link mapping information.

Herein, the first dataset includes but is not limited to at least one of: buffer status information corresponding to the delay sensitive traffic, channel load information of a master link, transmission delay bound (Delay Bound) information associated with a TID corresponding to the delay sensitive traffic, mean data rate (Mean Date Rate) information associated with a TID, multi-link parameter information corresponding to the AP MLD, basic service set (Basic Service Set, BSS) load information corresponding to the delay sensitive traffic, data frame transmission rate information corresponding to the delay sensitive traffic, or mean arrival delay corresponding to a TID corresponding to a last delay sensitive traffic.

Specifically, arrival traffic streams (i.e., TIDs) of the Non-AP MLD(s) and/or the AP MLD may be classified based on their priorities and transmission delay requirements, such as classified into a delay sensitive traffic stream (TID corresponding to a delay sensitive traffic) and a non-delay sensitive traffic stream (TID corresponding to a non-delay sensitive traffic), where the delay sensitive traffic stream (TID corresponding to the delay sensitive traffic) has the highest priority during the transmission; and in the embodiments of the present disclosure, in order to ensure that the delay sensitive traffic stream (TID corresponding to the delay sensitive traffic) has the highest priority during the transmission and to meet the transmission delay/deadline time requirement of the delay sensitive traffic stream (TID corresponding to the delay sensitive traffic), the delay sensitive traffic stream (TID corresponding to the delay sensitive traffic) is mapped to one or more links with the highest link quality among all links, for transmitting.

In some embodiments, the buffer status information corresponding to the delay sensitive traffic includes at least one of: buffer status information (such as BSR) of an affiliated STA with the delay sensitive traffic among affiliated STAs of at least one Non-AP MLD associated with the AP MLD, or buffer status information (such as BSR) of an affiliated AP with the delay sensitive traffic among affiliated APs of the AP MLD.

It should be noted that a link corresponding to an affiliated STA for the delay sensitive traffic present in affiliated STAs of the Non-AP MLD may be an enabled link of the Non-AP MLD.

In some embodiments, the buffer status information (such as BSR) includes but is not limited to at least one of: a number of TIDs corresponding to the delay sensitive traffic in a buffer status, a queue size of a data frame corresponding to TIDs corresponding to the delay sensitive traffic in a buffer status, or a proportion of a data frame corresponding to TIDs corresponding to the delay sensitive traffic in a buffer status.

Optionally, the AP MLD may acquire buffer status information (such as BSR) of each affiliated STA corresponding to the enabled link of the Non-AP MLD. Specifically, the AP MLD sends a BSR polling trigger frame on a master link to the Non-AP MLD with which the AP MLD establishes a connection, and the Non-AP MLD feeds back a BSR frame to the AP MLD, so that the AP MLD may acquire the buffer status information (such as BSR) of each affiliated STA corresponding to the enabled link of the Non-AP MLD. Herein, a format of a BSR control field in the BSR frame may be shown in FIG. 6, and the buffer status reported in the BSR control field includes sub-domain (sub-field) information such as access category index (ACI) bitmap (ACI bitmap), delta TID, high priority access type (ACI High), and two queue sizes (high priority queue size (Queue Size High) and all queue sizes (Queue Size All)). That is, in FIG. 6, the access categories of different buffer statuses are indicated by the ACI Bitmap, the delta TID indicates the number of TIDs in the buffer state, and the Queue Size All used in conjunction with a scaling factor (Scaling Factor, SF) may indicate a cache queue size.

In some embodiments, the AP MLD may send a channel load request frame to at least one Non-AP MLD associated therewith, and the Non-AP MLD senses whether the channel is clear through a virtual/physical carrier sensing mechanism, calculates the channel load, and feeds back the channel load to the AP MLD through a channel load response frame.

In some embodiments, the BSS load information corresponding to the delay sensitive traffic includes but is not limited to at least one of: a number of STAs associated with a TID corresponding to the delay sensitive traffic, a channel bandwidth utilization of a master link, a channel bandwidth utilization of a slave link, a frequency remaining utilization, or a spatial stream remaining utilization.

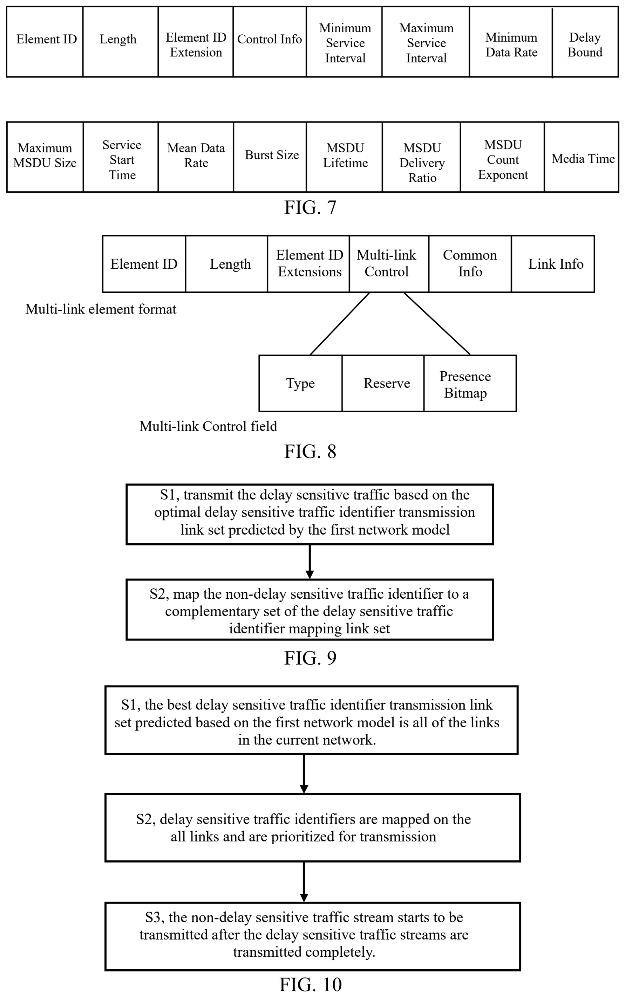

In some embodiments, the AP MLD may send an add traffic stream request frame (ADDTS request frame) to at least one Non-AP MLD associated with it, to acquire a traffic specification and a quality of service (QoS) requirement of the delay sensitive traffic, and the Non-AP MLD transmits an add traffic stream response frame (ADDTS response frame) as a response to the ADDTS request frame, and reports the traffic specification and the QoS requirement of the traffic stream to be transmitted by the AP MLD currently. Specifically, a format of the QoS characteristics element in the add traffic stream response frame may be as shown in FIG. 7, and the QoS characteristics element may indicate the traffic specification, link information, etc., transmitted between the AP MLD and the Non-AP MLD.

In some embodiments, the data frame transmission rate information corresponding to the delay sensitive traffic includes but is not limited to at least one of: a data frame transmission rate of an STA with the delay sensitive traffic among affiliated STAs of at least one Non-AP MLD associated with the AP MLD, a data frame transmission rate of an affiliated AP with the delay sensitive traffic among affiliated APs of the AP MLD, or a data frame transmission rate of each access category (AC) of ACs corresponding to the delay sensitive traffic.

Optionally, the data frame transmission rate is determined based on a data frame transmission rate variation curve within a first duration. Optionally, the first duration may be a specific duration, a duration before the current moment, or a preset duration. Specifically, for example, the first duration may include one or more time units, where the time unit may be one of: minute, second, millisecond, microsecond, symbol, slot, micro-slot, subframe, or frame.

Specifically, for example, the AP MLD queries a data transmission rate curve for a period of time of a STA with the delay sensitive traffic among affiliated STAs of at least one Non-AP MLD associated with the AP MLD, to determine the data frame transmission rate; and/or, the AP MLD queries a transmission rate variation curve of a data frame corresponding to each AC corresponding to a link with the delay sensitive traffic among affiliated STAs of at least one Non-AP MLD associated with the AP MLD, to determine the data frame transmission rate; and/or, the AP MLD queries a data transmission rate curve for a period of time of an AP with the delay sensitive traffic among its affiliated APs, to determine the data frame transmission rate; and/or, the AP MLD queries a transmission rate variation curve of a data frame corresponding to each AC corresponding to a link with the delay sensitive traffic among its affiliated APs, to determine the data frame transmission rate.

In some embodiments, the multi-link parameter information corresponding to the AP MLD includes but is not limited to at least one of: identifiers of n links, a frequency corresponding to each link of n links, a channel bandwidth corresponding to each link of n links, a number of spatial streams corresponding to each link of n links, or a link quality corresponding to each link of n links; where the n links are links established between at least one Non-AP MLD associated with the AP MLD and the AP MLD, and n is a positive integer.

In some embodiments, the AP MLD may acquire the multi-link parameter information corresponding to the AP MLD through a Multi-Link element, where a format of the Multi-Link element may be shown in FIG. 8. Specifically, the Multi-Link element may indicate: a link identifier; a frequency, a channel bandwidth, the number of spatial streams and other information corresponding to a link (e.g., link 1, Channel 2.4GHz, Band 20MHz, 8 spatial streams); link qualities of all links (e.g., a link with a value higher than a clear channel assessment (CCA) value is set to be enabled, otherwise disabled).

In some embodiments, the multiple TIDs are sequentially mapped to part or all of n links in descending order of link qualities, or the multiple TIDs are prioritized to mapped to part or all of n links, or the multiple TIDs are sequentially mapped to part or all of n links in descending order of numbers of spatial streams corresponding to the links, or the multiple TIDs are sequentially mapped to part or all of n links in descending order of spatial stream remaining utilizations corresponding to the links. The n links are links established between at least one Non-AP MLD associated with the AP MLD and the AP MLD, and n is a positive integer.

In some embodiments, a TID corresponding to the non-delay sensitive traffic is mapped to a link to which the multiple TIDs are not mapped among the n links. For example, the TID mapping scheme corresponding to the non-delay sensitive traffic may be shown in FIG. 9, and a complementary set of the delay sensitive traffic identifier mapping link set is used as the non-delay sensitive traffic transmission link set, which meets the throughput requirement of the non-delay sensitive traffic.

In some embodiments, a TID corresponding to the non-delay sensitive traffic is mapped to part or all of the n links after the multiple TIDs are mapped to corresponding links and transmissions are completed. For example, the TID mapping scheme corresponding to the non-delay sensitive traffic may be shown in FIG. 10. If the delay sensitive TID mapping link set is all links, the delay sensitive traffic streams are prioritized to be transmitted on all links, and the non-delay sensitive traffic stream starts to be transmitted after the delay sensitive traffic streams are transmitted completely.

In some embodiments, the AP MLD maps a TID corresponding to a traffic to be transmitted by the AP MLD among the multiple TIDs to a corresponding link according to the TID-to-link mapping information, and/or, the AP MLD sends first information, where the first information includes the TID-to-link mapping information.

In some embodiments, in a case where a transmission delay corresponding to a mapping scheme indicated by the TID-to-link mapping information meets a first preset condition, the AP MLD maps a TID corresponding to a traffic to be transmitted by the AP MLD among the multiple TIDs to a corresponding link according to the TID-to-link mapping information, and/or, the AP MLD sends first information, where the first information includes the TID-to-link mapping information.

Optionally, the case where the transmission delay corresponding to the mapping scheme indicated by the TID-to-link mapping information meets the first preset condition, includes:
the transmission delay of a link mapped to each TID indicated by the TID-to-link mapping information being less than or equal to a first threshold, or mean transmission delay of links mapped to all TIDs indicated by the TID-to-link mapping information being less than or equal to a first threshold.

Optionally, the first threshold is agreed upon by a protocol, or the first threshold is determined by the AP MLD.

Optionally, the first information is carried by one of: a beacon frame, a probe response frame, an association response frame, or a re-association response frame.

In some embodiments, before the AP MLD sends the first information, the AP MLD receives second information, where the second information is used to request the TID-to-link mapping information. Optionally, the second information is carried by one of: a beacon frame, a probe request frame, an association request frame, or a re-association request frame.

Specifically, for example, the second information is carried by a beacon frame, and the first information is also carried by a beacon frame.

Specifically, for example, the second information is carried by a probe request frame, and the first information is carried by a probe response frame.

Specifically, for example, the second information is carried by an association request frame, and the first information is carried by an association response frame.

Specifically, for example, the second information is carried by a re-association request frame, and the first information is carried by a re-association response frame.

In some embodiments, in a case where a transmission delay corresponding to a mapping scheme indicated by the TID-to-link mapping information does not meet a first preset condition, the AP MLD re-predicts the TID-to-link mapping information via the first network model, or the AP MLD re-trains the first network model, or the AP MLD switches from the first network model to another network model that implements a same function as the first network model.

In some embodiments, the AP MLD determines whether the transmission delay corresponding to the mapping scheme indicated by the TID-to-link mapping information meets the first preset condition, according to a first period. Optionally, the first period is agreed upon by a protocol, or the first period is determined by the AP MLD.

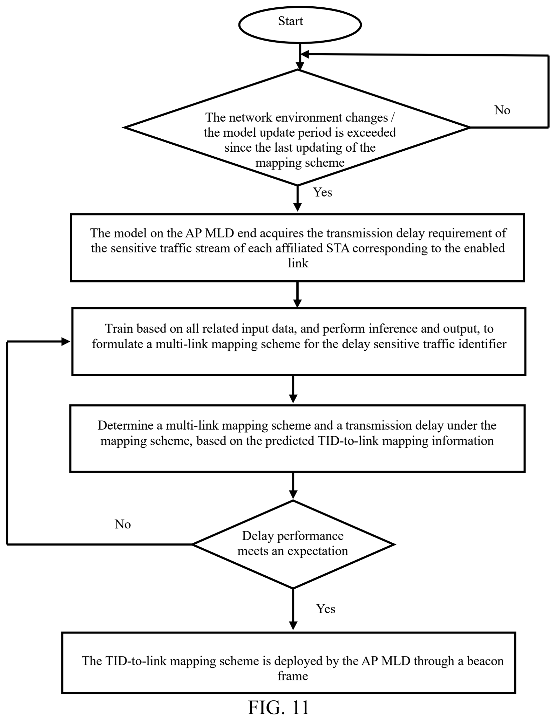

In some embodiments, a prediction procedure of a TID-to-link mapping scheme (TID-To-Link Mapping) corresponding to the delay sensitive traffic may be shown in FIG. 11. Specifically, the network conditions may change at any time, so timely updating of the model (i.e., the first network model) is essential for real-time deployment of the optimal link mapping scheme. The updating of the model (i.e., the first network model) may be based on the following two aspects: 1) a period; 2) whether a related measurement value in the network environment changes. The model updating period may be set to a fixed value according to the data assessment condition, or may be updated adaptively according to the case of network load and channel occupancy. In a given period, the AP MLD determines the optimal link mapping scheme at that moment, and checks whether it is equal to the link mapping scheme at the previous moment; and if any one of input parameters changes, the AP MLD determines a new optimal link mapping scheme and informs all Non-AP MLDs of new link mapping parameters, and deploys to all Non-AP MLDs associated with the AP MLD through the transmission of the beacon frame/association frame/probe request frame. The AP MLD acquires the transmission delay requirement of the delay sensitive traffic stream of each affiliated STA corresponding to the enabled link, and a Non-AP MLD has at least one delay sensitive traffic stream. Based on machine learning, the model, by inputting network measurement value information (such as delay sensitive data frame transmission rate, link quality, etc.), formulates a set of optimal link mapping schemes for the current delay sensitive traffic identifier, determines the delay performance generated by the current delay sensitive traffic identifier to multi-link mapping scheme and whether the timely delivery of the delay sensitive data frame can be ensured; and if the low delay performance of the current link mapping scheme achieves the expected effect (e.g., the mean arrival delay is less than 5ms), then the delay sensitive traffic identifier to multi-link mapping scheme is determined to be the current optimal mapping scheme, and the delay sensitive traffic stream is mapped to the optimal transmission link set, and the channel access is enabled for the transmission of the delay sensitive data frame. If the performance is poor, the model training and inference will be returned, and the optimal delay sensitive traffic identifier to multi-link mapping scheme will be re-calculated and deployed based on real-time low-delay traffic requirements.

In some embodiments, when the multiple TIDs are TIDs corresponding to the non-delay sensitive traffic, the above S210 may specifically include:
inputting, by the AP MLD, a second dataset into the first network model, which outputs the TID-to-link mapping information.

Herein, the second dataset includes but is not limited to at least one of: buffer status information corresponding to the non-delay sensitive traffic, mean data rate (Mean Date Rate) information associated with a TID, multi-link parameter information corresponding to the AP MLD, BSS load information corresponding to the non-delay sensitive traffic, data frame transmission rate information corresponding to the non-delay sensitive traffic, or mean throughput corresponding to a TID corresponding to a last non-delay sensitive traffic.

In some embodiments, the buffer status information corresponding to the non-delay sensitive traffic includes, but is not limited to, at least one of: buffer status information (such as BSR) of an affiliated STA with the non-delay sensitive traffic among affiliated STAs of at least one Non-AP MLD associated with the AP MLD, or buffer status information (such as BSR) of an affiliated AP with the non-delay sensitive traffic among affiliated APs of the AP MLD.

In some embodiments, the buffer status information (such as BSR) includes, but is not limited to, at least one of: a number of TIDs corresponding to the non-delay sensitive traffic in a buffer status, a queue size of a data frame corresponding to TIDs corresponding to the non-delay sensitive traffic in a buffer status, or a proportion of a data frame corresponding to TIDs corresponding to the non-delay sensitive traffic in a buffer status.

Specifically, the AP MLD sends a BSR polling trigger frame on a master link to the Non-AP MLD with which the AP MLD establishes a connection, and the Non-AP MLD feeds back a BSR frame to the AP MLD, so that the AP MLD may acquire the buffer status information (such as BSR) of each affiliated STA corresponding to the enabled link of the Non-AP MLD. Herein, a format of a BSR control field in the BSR frame may be shown in FIG. 6, and the buffer status reported in the BSR control field includes sub-domain (sub-field) information such as ACI bitmap (ACI bitmap), delta traffic identifier (delta TID), high priority access type (ACI High), and two queue sizes (high priority queue size (Queue Size High) and all queue sizes (Queue Size All)). That is, in FIG. 6, the access categories of different buffer statuses are indicated by the ACI Bitmap, the delta TID indicates the number of TIDs in the buffer state, and the Queue Size All used in conjunction with a scaling factor (Scaling Factor, SF) may indicate a cache queue size.

In some embodiments, the BSS load information corresponding to the non-delay sensitive traffic includes but is not limited to at least one of: a number of STAs associated with a TID corresponding to the non-delay sensitive traffic, a channel bandwidth utilization of a master link, a channel bandwidth utilization of a slave link, a frequency remaining utilization, or a spatial stream remaining utilization.

In some embodiments, the AP MLD may send an add traffic stream request frame (ADDTS request frame) to at least one Non-AP MLD associated with it, to acquire a traffic specification and a quality of service (QoS) requirement of the delay sensitive traffic, and the Non-AP MLD transmits an add traffic stream response frame (ADDTS response frame) as a response to the ADDTS request frame, and reports the traffic specification and the QoS requirement of the traffic stream to be transmitted by the AP MLD currently. Specifically, a format of the QoS characteristics element in the add traffic stream response frame may be as shown in FIG. 7, and the QoS characteristics element may indicate the traffic specification, link information, etc., transmitted between the AP MLD and the Non-AP MLD.

In some embodiments, the data frame transmission rate information corresponding to the non-delay sensitive traffic includes, but is not limited to, at least one of: a data frame transmission rate of an STA with the non-delay sensitive traffic among affiliated STAs of at least one Non-AP MLD associated with the AP MLD, a data frame transmission rate of an affiliated AP with the non-delay sensitive traffic among affiliated APs of the AP MLD, or a data frame transmission rate of each AC of ACs corresponding to the non-delay sensitive traffic.

Optionally, the data frame transmission rate is determined based on a data frame transmission rate variation curve within a second duration. Optionally, the second duration may be a specific duration, a duration before the current moment, or a preset duration. Specifically, for example, the second duration may include one or more time units, where the time unit may be one of: minute, second, millisecond, microsecond, symbol, slot, micro-slot, subframe, or frame.

Specifically, for example, the AP MLD queries a data transmission rate curve for a period of time of a STA with the non-delay sensitive traffic among affiliated STAs of at least one Non-AP MLD associated with the AP MLD, to determine the data frame transmission rate; and/or, the AP MLD queries a transmission rate variation curve of a data frame corresponding to each AC corresponding to a link with the non-delay sensitive traffic among affiliated STAs of at least one Non-AP MLD associated with the AP MLD, to determine the data frame transmission rate; and/or, the AP MLD queries a data transmission rate curve for a period of time of an AP with the non-delay sensitive traffic among its affiliated APs, to determine the data frame transmission rate; and/or, the AP MLD queries a transmission rate variation curve of a data frame corresponding to each AC corresponding to a link with the non-delay sensitive traffic among its affiliated APs, to determine the data frame transmission rate.

In some embodiments, the multi-link parameter information corresponding to the AP MLD includes but is not limited to at least one of: identifiers of n links, a frequency corresponding to each link of n links, a channel bandwidth corresponding to each link of n links, a number of spatial streams corresponding to each link of n links, or a link quality corresponding to each link of n links; where the n links are links established between at least one Non-AP MLD associated with the AP MLD and the AP MLD, and n is a positive integer.

In some embodiments, the AP MLD may acquire the multi-link parameter information corresponding to the AP MLD through a Multi-Link element, where a format of the Multi-Link element may be shown in FIG. 8. Specifically, the Multi-Link element may indicate: a link identifier; a frequency, a channel bandwidth, the number of spatial streams and other information corresponding to a link (e.g., link 1, Channel 2.4GHz, Band 20MHz, 8 spatial streams); link qualities of all links (e.g., a link with a value higher than a clear channel assessment (CCA) value is set to be enabled, otherwise disabled).

In some embodiments, the AP MLD maps a TID corresponding to a traffic to be transmitted by the AP MLD among the multiple TIDs to a corresponding link according to the TID-to-link mapping information, and/or, the AP MLD sends first information, where the first information includes the TID-to-link mapping information.

In some embodiments, in a case where throughput information corresponding to a mapping scheme indicated by the TID-to-link mapping information meets a second preset condition, the AP MLD maps a TID corresponding to a traffic to be transmitted by the AP MLD among the multiple TIDs to a corresponding link according to the TID-to-link mapping information, and/or, the AP MLD sends first information, where the first information includes the TID-to-link mapping information.

Optionally, the case where the throughput information corresponding to the mapping scheme indicated by the TID-to-link mapping information meets the second preset condition, includes:
throughput of a link mapped to each TID indicated by the TID-to-link mapping information being greater than or equal to a second threshold, or mean throughput of links mapped to all TIDs indicated by the TID-to-link mapping information being greater than or equal to a second threshold.

Optionally, the second threshold is agreed upon by a protocol, or the second threshold is determined by the AP MLD.

In some embodiments, in a case where throughput information corresponding to a mapping scheme indicated by the TID-to-link mapping information does not meet a second preset condition, the AP MLD re-predicts the TID-to-link mapping information via the first network model, or the AP MLD re-trains the first network model, or the AP MLD switches from the first network model to another network model that implements a same function as the first network model.

Optionally, the first information is carried by one of: a beacon frame, a probe response frame, an association response frame, or a re-association response frame.

In some embodiments, before the AP MLD sends the first information, the AP MLD receives second information, where the second information is used to request the TID-to-link mapping information. Optionally, the second information is carried by one of: a beacon frame, a probe request frame, an association request frame, or a re-association request frame.

Specifically, for example, the second information is carried by a beacon frame, and the first information is also carried by a beacon frame.

Specifically, for example, the second information is carried by a probe request frame, and the first information is carried by a probe response frame.

Specifically, for example, the second information is carried by an association request frame, and the first information is carried by an association response frame.

Specifically, for example, the second information is carried by a re-association request frame, and the first information is carried by a re-association response frame.

In some embodiments, the AP MLD determines whether the throughput information corresponding to the mapping scheme indicated by the TID-to-link mapping information meets the second preset condition, according to a second period. Optionally, the second period is agreed upon by a protocol, or the second period is determined by the AP MLD.

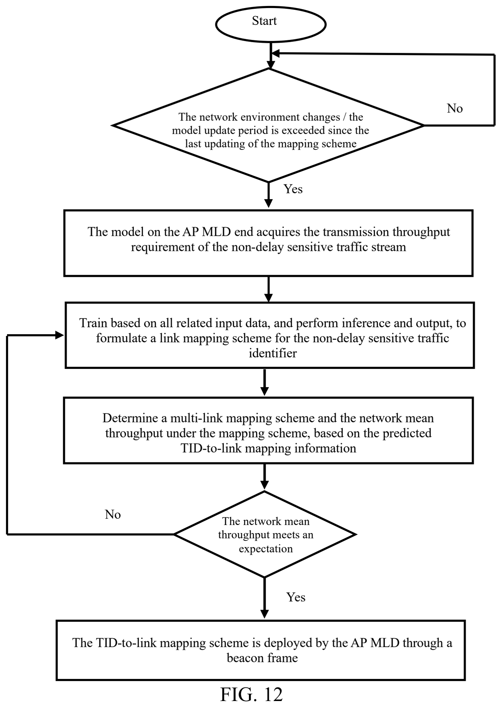

In some embodiments, a prediction procedure of a TID-to-link mapping scheme (TID-To-Link Mapping) corresponding to the non-delay sensitive traffic may be shown in FIG. 12. Specifically, the network conditions may change at any time, so timely updating of the model (i.e., the first network model) is essential for real-time deployment of the optimal link mapping scheme. The updating of the model (i.e., the first network model) may be based on the following two aspects: 1) a period; 2) whether a related measurement value in the network environment changes. The model updating period may be set to a fixed value according to the data assessment condition, or may be updated adaptively according to the case of network load and channel occupancy. In a given period, the AP MLD determines the optimal link mapping scheme at that moment, and checks whether it is equal to the link mapping scheme at the previous moment; and if any one of input parameters changes, the AP MLD determines a new optimal link mapping scheme and informs all Non-AP MLDs of new link mapping parameters, and deploys to all Non-AP MLDs associated with the AP MLD through the transmission of the beacon frame/association frame/probe request frame. The AP MLD acquires the transmission delay requirement of the non-delay sensitive traffic stream of each affiliated STA corresponding to the enabled link. Based on machine learning, the model, by inputting network measurement value information (such as non-delay sensitive data frame transmission rate, link quality, etc.), formulates a set of optimal link mapping schemes for the current non-delay sensitive traffic identifier, determines the throughput performance generated by the current non-delay sensitive traffic identifier to multi-link mapping scheme and whether the timely delivery of the non-delay sensitive data frame can be ensured; and if the throughput performance of the current link mapping scheme achieves the expected effect, then the non-delay sensitive traffic identifier to multi-link mapping scheme is determined to be the current optimal mapping scheme, and the non-delay sensitive traffic stream is mapped to the optimal transmission link set, and the channel access is enabled for the transmission of the non-delay sensitive data frame. If the performance is poor, the model training and inference will be returned, and the optimal delay sensitive traffic identifier to multi-link mapping scheme will be re-calculated and deployed based on the throughput requirement.

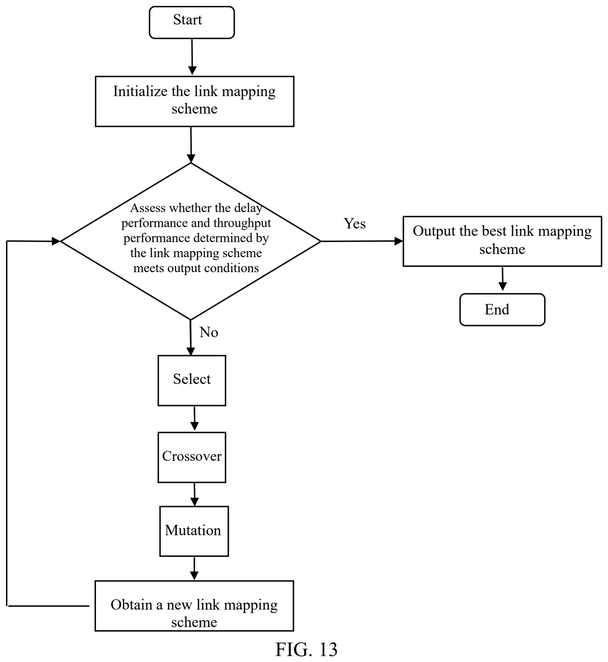

In some embodiments, the AP MLD predicts TID-To-Link Mapping based on buffer status information, information of each link (including frequency, bandwidth, link load, the number of spatial streams), traffic specification, and historical prediction information. In this embodiment, the output may be the number of spatial streams of each link, and among the many parameters that affect the physical transmission rate, the number of spatial streams (/spatial stream remaining utilization) is a decisive parameter. A genetic algorithm (including but not limited to the genetic algorithm) may be used to optimize the mapped link of the delay sensitive traffic identifier, to find one or more links with the maximum spatial traffic remaining utilization for mapping and transmitting. The genetic algorithm simulates the natural selection and evolution process of organisms with reference to Darwin's theory of biological evolution and genetic mechanisms. As shown in FIG. 13, the core of the algorithm of the embodiments of the present disclosure is the "selection", "crossover" and "mutation" operations. In this embodiment, the "selection" operation is to sort the predicted number of spatial streams (/spatial stream remaining utilization) from large to small, and sequentially map the delay sensitive traffic identifiers to a set of the first m links with the optimal link qualities, and map the non-delay sensitive traffic to the remaining (n-m) links (a total of n links). The traffic-link mapping pairs in the previous step are cross-combined by the crossover operator, that is, the parameters are fine-tuned until the global optimal solution is obtained. The mutation part may consider the urgent special situations in the current delay sensitive traffic stream, and specially allocate a transmission link for it, to finally obtain the optimal link mapping scheme.

Therefore, in the embodiments of the present disclosure, the AP MLD may determine the TID-to-link mapping information via the first network model, so that the TID-To-Link Mapping may be established accurately and efficiently. Specifically, the first network model (such as an AI/ML model) is deployed on the AP MLD end, and the AP MLD performs data collection, model training and inference, to predict a optimal link set for delay sensitive traffic streams or non-delay sensitive traffic streams, and uses a beacon frame/association request frame/probe request frame to broadcast and deploy the TID-To-Link mapping association (TID-To-Link Mapping) predicted by the first network model (such as the AI/ML model) to part or all of Non-AP MLDs associated with the AP MLD, thereby completing the mapping of delay sensitive traffic streams and/or non-delay sensitive traffic streams to multiple links, which may improve the mapping efficiency and accuracy of TIDs to links, and may optimize the transmission of delay sensitive traffic streams and/or non-delay sensitive traffic streams. For example, for the rapidly changing link information and the low delay requirement of delay sensitive traffic streams, a link mapping scheme is deployed in real time for the delay sensitive traffic streams, to ensure that each generated delay sensitive traffic stream may be transmitted timely, thereby improving the low delay performance of the delay sensitive traffic. Furthermore, when the low delay performance generated by a predicted link mapping scheme reaches an expected effect, the predicted link mapping scheme is the optimal delay sensitive traffic identifier to multi-link mapping scheme at the current moment.

The technical solutions of the present disclosure are described in detail below through Embodiment 1 and Embodiment 2.

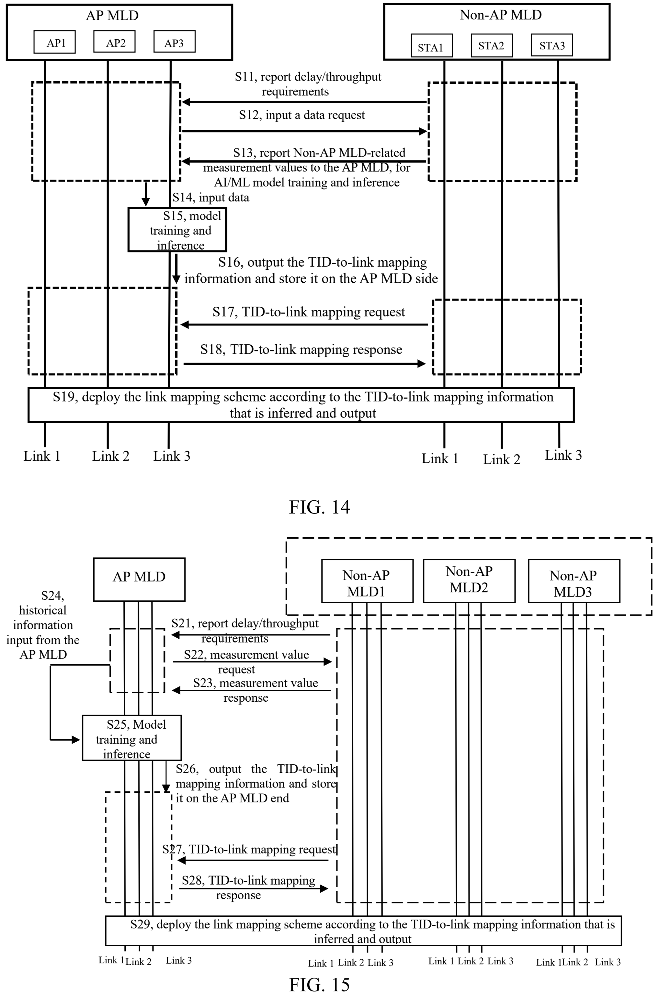

In Embodiment 1, a signaling interaction procedure from a single AP MLD to a single Non-AP MLD may be shown in FIG. 14, including data collection, training and inference of the AI/ML model (i.e., the first network model mentioned above), where data in the data collection is used as input information for AI/ML model training and AI/ML model inference respectively in a certain proportion. The TID-To-Link Mapping prediction procedure shown in FIG. 14 may specifically include the following S11 to S19.

S11: the Non-AP MLD reports the traffic request of the corresponding traffic identifier, such as delay/throughput.

S12: the AP MLD requests, from the Non-AP MLD associated with the AP MLD, the buffer status information of each affiliated STA corresponding to the enabled link, channel load, and QoS characteristic parameter: Delay Bound and Mean Data Rate. Specifically, the AP MLD broadcasts a control frame (such as a BSR polling trigger frame), to request the Non-AP MLD for the buffer status information of each affiliated STA corresponding to the enabled link within a period of time, including the number of delay sensitive traffic identifiers TIDs and the corresponding queue size; the AP MLD sends a Channel Load request frame to request the Non-AP MLD for the channel load; the AP MLD sends an ADDTS request frame to the Non-AP MLD to acquire the traffic specification and QoS characteristic parameter of the delay sensitive traffic, such as the delay bound and mean data rate of the delay sensitive TID. These parameters will serve as input information for AI/ML model training and prediction.

S13: the Non-AP MLD responds to the received request and provides the AP MLD with the buffer status information of each affiliated STA corresponding to the enabled link of the Non-AP MLD within a period of time, the channel load, and the QoS characteristic parameter of the delay sensitive TID. Specifically, the Non-AP MLD feeds back the buffer status report of each affiliated STA corresponding to its enabled link by sending a BSR frame to the AP MLD; the Non-AP MLD feeds back the channel load by sending a Channel Load response frame to the AP MLD; the Non-AP MLD sends an ADDTS response frame to report the traffic specification and QoS characteristic parameter.

S14: the input data of the AI/ML model training and inference includes two parts: the mean arrival delay of historical delay sensitive traffic streams, the multi-link parameter, the BSS Load parameter and the data frame transmission rate corresponding to the delay sensitive traffic identifier TID, that are acquired locally from the AP MLD; and the buffer status report, the channel load of all links, and the QoS characteristic parameter, that are fed back from the Non-AP MLD.
S15: use the input data from S13 to train the AI/ML model and perform inference to output;
S16: output TID-To-Link Mapping and update the parameter information included in the TID-To-Link Mapping on the AP MLD side;
S17: The Non-AP MLD sends a TID-To-Link Mapping Request (TID-To-Link Mappings. Request) to the AP MLD. That is, the Non-AP MLD initiates a request to negotiate a TID-to-link mapping for establishing a link by a peer media access control (Media Access Control, MAC) entity. It may be a beacon frame/probe request frame/(re-)association request frame.
S18: the AP MLD receives the link mapping request, and responds to it by sending a TID-To-Link Mapping Response (TID-To-Link Mappings. Response). It may be a beacon frame/probe response frame/(re-)association response frame.
S19: the AP MLD end assisted by the AI/ML model obtains multiple link information and the TID-To-Link Mapping requirements of the sending end, therefore, a link mapping scheme is formulated on the AP MLD end and deployed through the beacon frame/probe response frame/association response frame. According to the traffic identifier to multi-link mapping parameter carried in S18, the mapping of all traffic streams to be transmitted to links is completed. The designated transmission links are allocated to the delay sensitive traffic stream to be transmitted present in the network to meet its low delay requirement, and the designated transmission links are allocated to the non-delay sensitive traffic stream to meet its throughput requirement.

In Embodiment 2, a signaling interaction procedure from a single AP MLD to multiple Non-AP MLDs may be shown in FIG. 15, including data collection, training and inference of the AI/ML model (i.e., the first network model mentioned above), where data in the data collection is used as input information for AI/ML model training and AI/ML model inference respectively in a certain proportion. The TID-To-Link Mapping prediction procedure shown in FIG. 15 may specifically include the following S21 to S29.

S21: multiple Non-AP MLDs report traffic requests of corresponding traffic identifiers, such as delay/throughput.

S22: the AP MLD requests, from multiple Non-AP MLDs associated with the AP MLD, related measurement values, including but not limited to the buffer status information of each affiliated STA corresponding to enabled links of the multiple Non-AP MLD, the channel load, the QoS characteristic parameter, and the traffic specification, etc. Specifically, the AP MLD broadcasts a control frame (such as a BSR polling trigger frame), to request the Non-AP MLD for the buffer status information of each affiliated STA corresponding to the enabled links of all Non-AP MLDs within a period of time: the number of delay sensitive traffic identifiers TIDs and the corresponding queue sizes; the AP MLD sends Channel Load request frames to request the Non-AP MLDs for the channel load; the AP MLD sends ADDTS request frames to the Non-AP MLDs to acquire the traffic specification and QoS characteristic parameter of the delay sensitive traffic, such as the delay bound and mean data rate of the delay sensitive TID. These parameters will serve as input information for AI/ML model training and prediction.

S23: at least one Non-AP MLD receives the request information and provides the AP MLD with the buffer status information, channel load, QoS characteristic parameter, and traffic specification, of the Non-AP MLD. Specifically, the Non-AP MLD feeds back the buffer status report by sending a BSR frame to the AP MLD; the Non-AP MLD feeds back the channel load by sending a Channel Load response frame to the AP MLD; the Non-AP MLD sends an ADDTS response frame to report the traffic specification and QoS characteristic parameter.

S24: the input data of the AI/ML model training and inference includes two parts: the mean arrival delay of historical delay sensitive traffic streams, the multi-link parameter, the BSS Load parameter and the data frame transmission rate corresponding to the delay sensitive traffic identifier TID, that are acquired locally from the AP MLD; and the buffer status report, the channel load of all links, and the QoS characteristic parameter, that are fed back from the Non-AP MLDs.

S25: use the input data of S23 to train the AI/ML model and perform model inference, and the inference result is cached in the beacon frame/probe request frame/association frame, to deploy TID-To-Link Mapping for all Non-AP MLDs.

S26: output TID-To-Link Mapping and update the parameter information included in the TID-To-Link Mapping at the AP MLD end;
S27: The Non-AP MLDs send TID-To-Link Mapping Requests (TID-To-Link Mappings. Request) to the AP MLD.

S28: the AP MLD receives the link mapping request, and responds to it by sending a TID-To-Link Mapping Response (TID-To-Link Mappings. Response).

S29: the AP MLD end assisted by the AI/ML model obtains multiple link information and the TID-To-Link Mapping requirements of the sending end, therefore, a link mapping scheme is formulated on the AP MLD end and deployed through the beacon frame/probe response frame/association response frame. According to the traffic identifier to multi-link mapping parameter carried in S28, the mapping of all traffic streams to be transmitted to links is completed. The designated transmission links are allocated to the delay sensitive traffic stream to be transmitted present in the network to meet its low delay requirement, and the designated transmission links are allocated to the non-delay sensitive traffic stream to meet its throughput requirement.

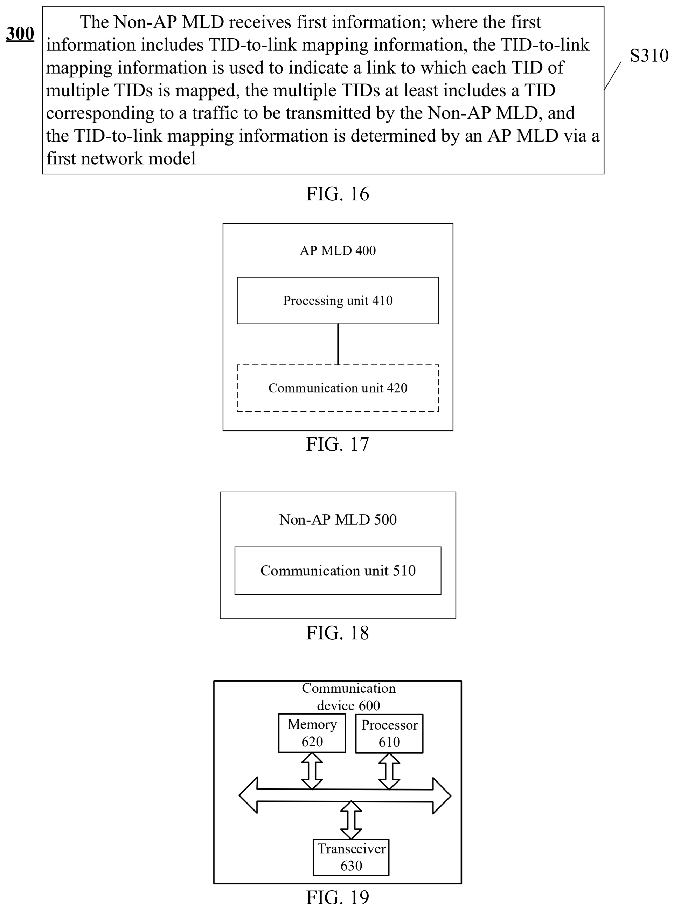

The above, in combination with FIG. 2 to FIG. 15, describes embodiments on the AP MLD side of the present disclosure in detail, the following, in combination with FIG. 16, describes embodiments on the Non-AP MLD side of the present disclosure in detail, and it should be understood that the embodiments on the Non-AP MLD side and the embodiments on the AP MLD side correspond to each other, and similar descriptions may refer to the embodiments on the AP MLD side.

FIG. 16 is a schematic flowchart of a wireless communication method 300 according to the embodiments of the present disclosure, and as shown in FIG. 16, the wireless communication method 300 may include at least part of the following contents.

S310: a Non-AP MLD receives first information; where the first information includes traffic identifier (TID)-to-link mapping information, the TID-to-link mapping information is used to indicate a link to which each TID of multiple TIDs is mapped, the multiple TIDs at least include a TID corresponding to a traffic to be transmitted by the Non-AP MLD, and the TID-to-link mapping information is determined by an AP MLD via a first network model.

In the embodiments of the present disclosure, since the AP MLD has a global perspective of the network, it may control its associated Non-AP MLDs, and for example, the AP MLD acquires input data of the first network model from one or more its associated Non-AP MLDs. Therefore, the AP MLD side may deploy the first network model, and the AP MLD may perform data collection, model training, and prediction of the TID-to-link mapping relationship (TID-To-Link Mapping). The Non-AP MLD associated with the AP MLD may determine a transmission link set/transmission scheme for a delay sensitive traffic stream and/or a non-delay sensitive traffic stream based on the predicted TID-To-Link Mapping.

In some embodiments, the multiple TIDs further include at least one of: a TID corresponding to a traffic to be transmitted by at least one other Non-AP MLD associated with the AP MLD, or a TID corresponding to a traffic to be transmitted by the AP MLD.

In some embodiments, the multiple TIDs are TIDs corresponding to a delay sensitive traffic, or the multiple TIDs are TIDs corresponding to a non-delay sensitive traffic.

In some embodiments, in a case where the multiple TIDs are TIDs corresponding to the delay sensitive traffic, an input of the first network model is a first dataset.

Herein, the first dataset includes at least one of: buffer status information corresponding to the delay sensitive traffic, channel load information of a master link, transmission delay bound information associated with a TID corresponding to the delay sensitive traffic, mean data rate information associated with a TID, multi-link parameter information corresponding to the AP MLD, BSS load information corresponding to the delay sensitive traffic, data frame transmission rate information corresponding to the delay sensitive traffic, or mean arrival delay corresponding to a TID corresponding to a last delay sensitive traffic.

In some embodiments, the buffer status information corresponding to the delay sensitive traffic includes at least one of: buffer status information of an affiliated STA with the delay sensitive traffic among affiliated STAs of at least one Non-AP MLD associated with the AP MLD, or buffer status information of an affiliated AP with the delay sensitive traffic among affiliated APs of the AP MLD;

Herein, the at least one Non-AP MLD includes the Non-AP MLD.

In some embodiments, the buffer status information includes at least one of: a number of TIDs corresponding to the delay sensitive traffic in a buffer status, a queue size of a data frame corresponding to TIDs corresponding to the delay sensitive traffic in a buffer status, or a proportion of a data frame corresponding to TIDs corresponding to the delay sensitive traffic in a buffer status.

In some embodiments, the BSS load information corresponding to the delay sensitive traffic includes at least one of: a number of STAs associated with a TID corresponding to the delay sensitive traffic, a channel bandwidth utilization of a master link, a channel bandwidth utilization of a slave link, a frequency remaining utilization, or a spatial stream remaining utilization.

In some embodiments, the data frame transmission rate information corresponding to the delay sensitive traffic includes at least one of: a data frame transmission rate of an STA with the delay sensitive traffic among affiliated STAs of at least one Non-AP MLD associated with the AP MLD, a data frame transmission rate of an affiliated AP with the delay sensitive traffic among affiliated APs of the AP MLD, or a data frame transmission rate of each access category (AC) of ACs corresponding to the delay sensitive traffic.

Herein, the at least one Non-AP MLD includes the Non-AP MLD.

In some embodiments, the data frame transmission rate is determined based on a data frame transmission rate variation curve within a first duration.

In some embodiments, the multi-link parameter information corresponding to the AP MLD includes at least one of: identifiers of n links, a frequency corresponding to each link of n links, a channel bandwidth corresponding to each link of n links, a number of spatial streams corresponding to each link of n links, or a link quality corresponding to each link of n links.

Herein, the n links are links established between at least one Non-AP MLD associated with the AP MLD and the AP MLD, the at least one Non-AP MLD includes the Non-AP MLD, and n is a positive integer.

In some embodiments, the multiple TIDs are sequentially mapped to part or all of n links in descending order of link qualities, or the multiple TIDs are prioritized to mapped to part or all of n links, or the multiple TIDs are sequentially mapped to part or all of n links in descending order of numbers of spatial streams corresponding to the links, or the multiple TIDs are sequentially mapped to part or all of n links in descending order of spatial stream remaining utilizations corresponding to the links;

Herein, the n links are links established between at least one Non-AP MLD associated with the AP MLD and the AP MLD, the at least one Non-AP MLD includes the Non-AP MLD, and n is a positive integer.

In some embodiments, a TID corresponding to the non-delay sensitive traffic is mapped to a link to which the multiple TIDs are not mapped among the n links; or, a TID corresponding to the non-delay sensitive traffic is mapped to part or all of the n links after the multiple TIDs are mapped to corresponding links and transmissions are completed.

In some embodiments, receiving the first information by the Non-AP MLD, includes:
in a case where a transmission delay corresponding to a mapping scheme indicated by the TID-to-link mapping information meets a first preset condition, receiving the first information by the Non-AP MLD.

Optionally, the first information is carried by one of: a beacon frame, a probe response frame, an association response frame, or a re-association response frame.

In some embodiments, whether the transmission delay corresponding to the mapping scheme indicated by the TID-to-link mapping information meets the first preset condition, is determined according to a first period.

In some embodiments, the first period is agreed upon by a protocol, or the first period is determined by the AP MLD.

In some embodiments, the case where the transmission delay corresponding to the mapping scheme indicated by the TID-to-link mapping information meets the first preset condition, includes:
the transmission delay of a link mapped to each TID indicated by the TID-to-link mapping information being less than or equal to a first threshold, or mean transmission delay of links mapped to all TIDs indicated by the TID-to-link mapping information being less than or equal to a first threshold.

In some embodiments, the first threshold is agreed upon by a protocol, or the first threshold is determined by the AP MLD.

In some embodiments, before the Non-AP MLD receives the first information, the Non-AP MLD sends second information, where the second information is used to request the TID-to-link mapping information.

Optionally, the second information is carried by one of: a beacon frame, a probe request frame, an association request frame, or a re-association request frame.

In some embodiments, in a case where the multiple TIDs are TIDs corresponding to the non-delay sensitive traffic, an input of the first network model is a second dataset.

Herein, the second dataset includes at least one of: buffer status information corresponding to the non-delay sensitive traffic, mean data rate information associated with a TID, multi-link parameter information corresponding to the AP MLD, BSS load information corresponding to the non-delay sensitive traffic, data frame transmission rate information corresponding to the non-delay sensitive traffic, or mean throughput corresponding to a TID corresponding to a last non-delay sensitive traffic.

In some embodiments, the buffer status information corresponding to the non-delay sensitive traffic includes at least one of: buffer status information of an affiliated STA with the non-delay sensitive traffic among affiliated STAs of at least one Non-AP MLD associated with the AP MLD, or buffer status information of an affiliated AP with the non-delay sensitive traffic among affiliated APs of the AP MLD.

Herein, the at least one Non-AP MLD includes the Non-AP MLD.

In some embodiments, the buffer status information includes at least one of: a number of TIDs corresponding to the non-delay sensitive traffic in a buffer status, a queue size of a data frame corresponding to TIDs corresponding to the non-delay sensitive traffic in a buffer status, or a proportion of a data frame corresponding to TIDs corresponding to the non-delay sensitive traffic in a buffer status.

In some embodiments, the BSS load information corresponding to the non-delay sensitive traffic includes at least one of: a number of STAs associated with a TID corresponding to the non-delay sensitive traffic, a channel bandwidth utilization of a master link, a channel bandwidth utilization of a slave link, a frequency remaining utilization, or a spatial stream remaining utilization.

In some embodiments, the data frame transmission rate information corresponding to the non-delay sensitive traffic includes at least one of: a data frame transmission rate of an STA with the non-delay sensitive traffic among affiliated STAs of at least one Non-AP MLD associated with the AP MLD, a data frame transmission rate of an affiliated AP with the non-delay sensitive traffic among affiliated APs of the AP MLD, or a data frame transmission rate of each AC of ACs corresponding to the non-delay sensitive traffic.

Herein, the at least one Non-AP MLD includes the Non-AP MLD.

In some embodiments, the data frame transmission rate is determined based on a data frame transmission rate variation curve within a second duration.

In some embodiments, the multi-link parameter information corresponding to the AP MLD includes at least one of: identifiers of n links, a frequency corresponding to each link of n links, a channel bandwidth corresponding to each link of n links, a number of spatial streams corresponding to each link of n links, or a link quality corresponding to each link of n links.

The n links are links established between at least one Non-AP MLD associated with the AP MLD and the AP MLD, the at least one Non-AP MLD includes the Non-AP MLD, and n is a positive integer.

In some embodiments, receiving the first information by the Non-AP MLD, includes:
in a case where throughput information corresponding to a mapping scheme indicated by the TID-to-link mapping information meets a second preset condition, receiving the first information by the Non-AP MLD.

Optionally, the first information is carried by one of: a beacon frame, a probe response frame, an association response frame, or a re-association response frame.

In some embodiments, whether the throughput information corresponding to the mapping scheme indicated by the TID-to-link mapping information meets the second preset condition, is determined according to a second period.

In some embodiments, the second period is agreed upon by a protocol, or the second period is determined by the AP MLD.

In some embodiments, the case where the throughput information corresponding to the mapping scheme indicated by the TID-to-link mapping information meets the second preset condition, includes:
throughput of a link mapped to each TID indicated by the TID-to-link mapping information being greater than or equal to a second threshold, or mean throughput of links mapped to all TIDs indicated by the TID-to-link mapping information being greater than or equal to a second threshold.

In some embodiments, the second threshold is agreed upon by a protocol, or the second threshold is determined by the AP MLD.

In some embodiments, before the Non-AP MLD receives the first information, the Non-AP MLD sends second information, where the second information is used to request the TID-to-link mapping information.

Optionally, the second information is carried by one of: a beacon frame, a probe request frame, an association request frame, or a re-association request frame.

Therefore, in the embodiments of the present disclosure, the AP MLD may determine the TID-to-link mapping information via the first network model, so that the TID-To-Link Mapping may be established accurately and efficiently. Specifically, the first network model (such as an AI/ML model) is deployed on the AP MLD end, and the AP MLD performs data collection, model training and inference, to predict a optimal link set for delay sensitive traffic streams or non-delay sensitive traffic streams, and uses a beacon frame/association request frame/probe request frame to broadcast and deploy the TID-To-Link mapping association (TID-To-Link Mapping) predicted by the first network model (such as the AI/ML model) to part or all of Non-AP MLDs associated with the AP MLD, thereby completing the mapping of delay sensitive traffic streams and/or non-delay sensitive traffic streams to multiple links, which may improve the mapping efficiency and accuracy of TIDs to links, and may optimize the transmission of delay sensitive traffic streams and/or non-delay sensitive traffic streams. For example, for the rapidly changing link information and the low delay requirement of delay sensitive traffic streams, a link mapping scheme is deployed in real time for the delay sensitive traffic streams, to ensure that each generated delay sensitive traffic stream may be transmitted timely, thereby improving the low delay performance of the delay sensitive traffic. Furthermore, when the low delay performance generated by a predicted link mapping scheme reaches an expected effect, the predicted link mapping scheme is the optimal delay sensitive traffic identifier to multi-link mapping scheme at the current moment.

The above, in combination with FIG. 2 to FIG. 16, describes the method embodiments of the present disclosure in detail, and the following, in combination with FIG. 17 to FIG. 21, describes the apparatus embodiments of the present disclosure in detail, and it should be understood that the apparatus embodiments and the method embodiments correspond to each other, and similar descriptions may refer to the method embodiments.

FIG. 17 shows a schematic block diagram of an AP MLD 400 according to the embodiments of the present disclosure. As shown in FIG. 5 , the AP MLD 400 includes:
a processing unit 410, configured to determine traffic identifier (TID)-to-link mapping information via a first network model.

Herein, the TID-to-link mapping information is used to indicate a link to which each TID of multiple TIDs is mapped.

In some embodiments, the multiple TIDs include at least one of: a TID corresponding to a traffic to be transmitted by at least one non-access point multi-link device (Non-AP MLD) associated with the AP MLD, or a TID corresponding to a traffic to be transmitted by the AP MLD.

In some embodiments, the multiple TIDs are TIDs corresponding to a delay sensitive traffic, or the multiple TIDs are TIDs corresponding to a non-delay sensitive traffic.

In some embodiments, in a case where the multiple TIDs are TIDs corresponding to the delay sensitive traffic, the processing unit 310 is specifically configured to:
input a first dataset into the first network model, which outputs the TID-to-link mapping information.

Herein, the first dataset includes at least one of: buffer status information corresponding to the delay sensitive traffic, channel load information of a master link, transmission delay bound information associated with a TID corresponding to the delay sensitive traffic, mean data rate information associated with a TID, multi-link parameter information corresponding to the AP MLD, basic service set (BSS) load information corresponding to the delay sensitive traffic, data frame transmission rate information corresponding to the delay sensitive traffic, or mean arrival delay corresponding to a TID corresponding to a last delay sensitive traffic.

In some embodiments, the buffer status information corresponding to the delay sensitive traffic includes at least one of: buffer status information of an affiliated station (STA) with the delay sensitive traffic among affiliated STAs of at least one Non-AP MLD associated with the AP MLD, or buffer status information of an affiliated access point (AP) with the delay sensitive traffic among affiliated APs of the AP MLD.

In some embodiments, the buffer status information includes at least one of: a number of TIDs corresponding to the delay sensitive traffic in a buffer status, a queue size of a data frame corresponding to TIDs corresponding to the delay sensitive traffic in a buffer status, or a proportion of a data frame corresponding to TIDs corresponding to the delay sensitive traffic in a buffer status.

In some embodiments, the BSS load information corresponding to the delay sensitive traffic includes at least one of: a number of STAs associated with a TID corresponding to the delay sensitive traffic, a channel bandwidth utilization of a master link, a channel bandwidth utilization of a slave link, a frequency remaining utilization, or a spatial stream remaining utilization.

In some embodiments, the data frame transmission rate information corresponding to the delay sensitive traffic includes at least one of: a data frame transmission rate of an STA with the delay sensitive traffic among affiliated STAs of at least one Non-AP MLD associated with the AP MLD, a data frame transmission rate of an affiliated AP with the delay sensitive traffic among affiliated APs of the AP MLD, or a data frame transmission rate of each access category (AC) of ACs corresponding to the delay sensitive traffic.

In some embodiments, the data frame transmission rate is determined based on a data frame transmission rate variation curve within a first duration.

In some embodiments, the multiple TIDs are sequentially mapped to part or all of n links in descending order of link qualities, or the multiple TIDs are prioritized to mapped to part or all of n links, or the multiple TIDs are sequentially mapped to part or all of n links in descending order of numbers of spatial streams corresponding to the links, or the multiple TIDs are sequentially mapped to part or all of n links in descending order of spatial stream remaining utilizations corresponding to the links.

Herein, the n links are links established between at least one Non-AP MLD associated with the AP MLD and the AP MLD, and n is a positive integer.

In some embodiments, a TID corresponding to the non-delay sensitive traffic is mapped to a link to which the multiple TIDs are not mapped among the n links; or, a TID corresponding to the non-delay sensitive traffic is mapped to part or all of the n links after the multiple TIDs are mapped to corresponding links and transmissions are completed.

In some embodiments, the AP MLD 400 further includes: a communication unit 420;

The processing unit 410 is further configured to map a TID corresponding to a traffic to be transmitted by the AP MLD among the multiple TIDs to a corresponding link according to the TID-to-link mapping information, and/or the communication unit 420 is configured to send first information, where the first information includes the TID-to-link mapping information.

In some embodiments, the AP MLD 400 further includes: a communication unit 420;

In a case where a transmission delay corresponding to a mapping scheme indicated by the TID-to-link mapping information meets a first preset condition, the processing unit 410 is further configured to map a TID corresponding to a traffic to be transmitted by the AP MLD among the multiple TIDs to a corresponding link according to the TID-to-link mapping information, and/or, the communication unit 420 is configured to send first information, where the first information includes the TID-to-link mapping information; and/or,
in a case where a transmission delay corresponding to a mapping scheme indicated by the TID-to-link mapping information does not meet a first preset condition, the processing unit 410 is further configured to re-predict the TID-to-link mapping information via the first network model, or the processing unit 410 is further configured to re-train the first network model, or the processing unit 410 is further configured to switch from the first network model to another network model that implements a same function as the first network model.

In some embodiments, the processing unit 410 is further configured to determine whether the transmission delay corresponding to the mapping scheme indicated by the TID-to-link mapping information meets the first preset condition, according to a first period.

In some embodiments, the first period is agreed upon by a protocol, or the first period is determined by the AP MLD.

In some embodiments, the case where the transmission delay corresponding to the mapping scheme indicated by the TID-to-link mapping information meets the first preset condition, includes:
the transmission delay of a link mapped to each TID indicated by the TID-to-link mapping information being less than or equal to a first threshold, or mean transmission delay of links mapped to all TIDs indicated by the TID-to-link mapping information being less than or equal to a first threshold.

In some embodiments, the first threshold is agreed upon by a protocol, or the first threshold is determined by the AP MLD.

In some embodiments, in a case where the multiple TIDs are TIDs corresponding to the non-delay sensitive traffic, the processing unit 410 is specifically configured to:
input a second dataset into the first network model, which outputs the TID-to-link mapping information.

Herein, the second dataset includes at least one of: buffer status information corresponding to the non-delay sensitive traffic, mean data rate information associated with a TID, multi-link parameter information corresponding to the AP MLD, BSS load information corresponding to the non-delay sensitive traffic, data frame transmission rate information corresponding to the non-delay sensitive traffic, or mean throughput corresponding to a TID corresponding to a last non-delay sensitive traffic.

In some embodiments, the buffer status information corresponding to the non-delay sensitive traffic includes at least one of: buffer status information of an affiliated STA with the non-delay sensitive traffic among affiliated STAs of at least one Non-AP MLD associated with the AP MLD, or buffer status information of an affiliated AP with the non-delay sensitive traffic among affiliated APs of the AP MLD.

In some embodiments, the buffer status information includes at least one of: a number of TIDs corresponding to the non-delay sensitive traffic in a buffer status, a queue size of a data frame corresponding to TIDs corresponding to the non-delay sensitive traffic in a buffer status, or a proportion of a data frame corresponding to TIDs corresponding to the non-delay sensitive traffic in a buffer status.

In some embodiments, the BSS load information corresponding to the non-delay sensitive traffic includes at least one of: a number of STAs associated with a TID corresponding to the non-delay sensitive traffic, a channel bandwidth utilization of a master link, a channel bandwidth utilization of a slave link, a frequency remaining utilization, or a spatial stream remaining utilization.

In some embodiments, the data frame transmission rate information corresponding to the non-delay sensitive traffic includes at least one of: a data frame transmission rate of an STA with the non-delay sensitive traffic among affiliated STAs of at least one Non-AP MLD associated with the AP MLD, a data frame transmission rate of an affiliated AP with the non-delay sensitive traffic among affiliated APs of the AP MLD, or a data frame transmission rate of each AC of ACs corresponding to the non-delay sensitive traffic.

In some embodiments, the data frame transmission rate is determined based on a data frame transmission rate variation curve within a second duration.

In some embodiments, the AP MLD 400 further includes: a communication unit 420;

The processing unit 410 is further configured to map a TID corresponding to a traffic to be transmitted by the AP MLD among the multiple TIDs to a corresponding link according to the TID-to-link mapping information, and/or the communication unit 420 is configured to send first information, where the first information includes the TID-to-link mapping information.

In some embodiments, the AP MLD 400 further includes: a communication unit 420;

In a case where throughput information corresponding to a mapping scheme indicated by the TID-to-link mapping information meets a second preset condition, the processing unit 410 is further configured to map a TID corresponding to a traffic to be transmitted by the AP MLD among the multiple TIDs to a corresponding link according to the TID-to-link mapping information, and/or, the communication unit 420 is configured to send first information, where the first information includes the TID-to-link mapping information; and/or,
in a case where throughput information corresponding to a mapping scheme indicated by the TID-to-link mapping information does not meet a second preset condition, the processing unit 410 is further configured to re-predict the TID-to-link mapping information via the first network model, or the processing unit 410 is further configured to re-train the first network model, or the processing unit 410 is further configured to switch from the first network model to another network model that implements a same function as the first network model.

In some embodiments, the processing unit 410 is further configured to determine whether the throughput information corresponding to the mapping scheme indicated by the TID-to-link mapping information meets the second preset condition, according to a second period.

In some embodiments, the second period is agreed upon by a protocol, or the second period is determined by the AP MLD.

In some embodiments, the case where the throughput information corresponding to the mapping scheme indicated by the TID-to-link mapping information meets the second preset condition, includes:
throughput of a link mapped to each TID indicated by the TID-to-link mapping information being greater than or equal to a second threshold, or mean throughput of links mapped to all TIDs indicated by the TID-to-link mapping information being greater than or equal to a second threshold.

In some embodiments, the second threshold is agreed upon by a protocol, or the second threshold is determined by the AP MLD.

In some embodiments, before the AP MLD sends the first information, the communication unit 420 is further configured to receive second information, where the second information is used to request the TID-to-link mapping information.

In some embodiments, the second information is carried by one of: a beacon frame, a probe request frame, an association request frame, or a re-association request frame.

In some embodiments, the first information is carried by one of: a beacon frame, a probe response frame, an association response frame, or a re-association response frame.

In some embodiments, the multi-link parameter information corresponding to the AP MLD includes at least one of: identifiers of n links, a frequency corresponding to each link of n links, a channel bandwidth corresponding to each link of n links, a number of spatial streams corresponding to each link of n links, or a link quality corresponding to each link of n links.

Herein, the n links are links established between at least one Non-AP MLD associated with the AP MLD and the AP MLD, and n is a positive integer.

In some embodiments, the processing unit 410 is further configured to re-train the first network model according to a third period; or,
in a case where a new delay sensitive traffic arrives, and/or, in a case where network load and/or channel occupancy changes, the processing unit 410 is also configured to re-train the first network model, or the processing unit 410 is also configured to switch from the first network model to another network model that implements a same function as the first network model.

In some embodiments, the third period is determined based on network load information and/or channel occupancy information.

In some embodiments, the third period is agreed upon by a protocol, or the third period is determined by the AP MLD.

In some embodiments, the communication unit mentioned above may be a communication interface or a transceiver, or an input/output interface of a communication chip or a system on chip. The processing unit mentioned above may be one or more processors.

It should be understood that the AP MLD 400 according to the embodiments of the present disclosure may correspond to the AP MLD in the method embodiments of the present disclosure, and the above and other operations and/or functions of each unit in the AP MLD 400 are respectively for implementing the corresponding procedure of the AP MLD in the method 200 shown in FIG. 2, which will not be repeated here for the sake of brevity.

FIG. 18 shows a schematic block diagram of a Non-AP MLD 500 according to the embodiments of the present disclosure. As shown in FIG. 18, the Non-AP MLD 500 includes:
a communication unit 510, configured to receive first information.

Herein, the first information includes traffic identifier (TID)-to-link mapping information, the TID-to-link mapping information is used to indicate a link to which each TID of multiple TIDs is mapped, the multiple TIDs at least include a TID corresponding to a traffic to be transmitted by the Non-AP MLD, and the TID-to-link mapping information is determined by an access point multi-link device (AP MLD) via a first network model.

In some embodiments, the multiple TIDs further include at least one of: a TID corresponding to a traffic to be transmitted by at least one other Non-AP MLD associated with the AP MLD, or a TID corresponding to a traffic to be transmitted by the AP MLD.

In some embodiments, the multiple TIDs are TIDs corresponding to a delay sensitive traffic, or the multiple TIDs are TIDs corresponding to a non-delay sensitive traffic.

In some embodiments, in a case where the multiple TIDs are TIDs corresponding to the delay sensitive traffic, an input of the first network model is a first dataset.

Herein, the first dataset includes at least one of: buffer status information corresponding to the delay sensitive traffic, channel load information of a master link, transmission delay bound information associated with a TID corresponding to the delay sensitive traffic, mean data rate information associated with a TID, multi-link parameter information corresponding to the AP MLD, basic service set (BSS) load information corresponding to the delay sensitive traffic, data frame transmission rate information corresponding to the delay sensitive traffic, or mean arrival delay corresponding to a TID corresponding to a last delay sensitive traffic.

In some embodiments, the buffer status information corresponding to the delay sensitive traffic includes at least one of: buffer status information of an affiliated station (STA) with the delay sensitive traffic among affiliated STAs of at least one Non-AP MLD associated with the AP MLD, or buffer status information of an affiliated access point (AP) with the delay sensitive traffic among affiliated APs of the AP MLD.

Herein, the at least one Non-AP MLD includes the Non-AP MLD.

In some embodiments, the buffer status information includes at least one of: a number of TIDs corresponding to the delay sensitive traffic in a buffer status, a queue size of a data frame corresponding to TIDs corresponding to the delay sensitive traffic in a buffer status, or a proportion of a data frame corresponding to TIDs corresponding to the delay sensitive traffic in a buffer status.

In some embodiments, the BSS load information corresponding to the delay sensitive traffic includes at least one of: a number of STAs associated with a TID corresponding to the delay sensitive traffic, a channel bandwidth utilization of a master link, a channel bandwidth utilization of a slave link, a frequency remaining utilization, or a spatial stream remaining utilization.

In some embodiments, the data frame transmission rate information corresponding to the delay sensitive traffic includes at least one of: a data frame transmission rate of an STA with the delay sensitive traffic among affiliated STAs of at least one Non-AP MLD associated with the AP MLD, a data frame transmission rate of an affiliated AP with the delay sensitive traffic among affiliated APs of the AP MLD, or a data frame transmission rate of each access category (AC) of ACs corresponding to the delay sensitive traffic.

Herein, the at least one Non-AP MLD includes the Non-AP MLD.

In some embodiments, the data frame transmission rate is determined based on a data frame transmission rate variation curve within a first duration.

In some embodiments, the multiple TIDs are sequentially mapped to part or all of n links in descending order of link qualities, or the multiple TIDs are prioritized to mapped to part or all of n links, or the multiple TIDs are sequentially mapped to part or all of n links in descending order of numbers of spatial streams corresponding to the links, or the multiple TIDs are sequentially mapped to part or all of n links in descending order of spatial stream remaining utilizations corresponding to the links.

Herein, the n links are links established between at least one Non-AP MLD associated with the AP MLD and the AP MLD, the at least one Non-AP MLD includes the Non-AP MLD, and n is a positive integer.

In some embodiments, a TID corresponding to the non-delay sensitive traffic is mapped to a link to which the multiple TIDs are not mapped among the n links; or, a TID corresponding to the non-delay sensitive traffic is mapped to part or all of the n links after the multiple TIDs are mapped to corresponding links and transmissions are completed.

In some embodiments, the communication unit 510 is specifically configured to:
in a case where a transmission delay corresponding to a mapping scheme indicated by the TID-to-link mapping information meets a first preset condition, receive the first information.

In some embodiments, whether the transmission delay corresponding to the mapping scheme indicated by the TID-to-link mapping information meets the first preset condition, is determined according to a first period.

In some embodiments, the first period is agreed upon by a protocol, or the first period is determined by the AP MLD.

In some embodiments, the case where the transmission delay corresponding to the mapping scheme indicated by the TID-to-link mapping information meets the first preset condition, includes:
the transmission delay of a link mapped to each TID indicated by the TID-to-link mapping information being less than or equal to a first threshold, or mean transmission delay of links mapped to all TIDs indicated by the TID-to-link mapping information being less than or equal to a first threshold.

In some embodiments, the first threshold is agreed upon by a protocol, or the first threshold is determined by the AP MLD.

In some embodiments, in a case where the multiple TIDs are TIDs corresponding to the non-delay sensitive traffic, an input of the first network model is a second dataset.

Herein, the second dataset includes at least one of: buffer status information corresponding to the non-delay sensitive traffic, mean data rate information associated with a TID, multi-link parameter information corresponding to the AP MLD, BSS load information corresponding to the non-delay sensitive traffic, data frame transmission rate information corresponding to the non-delay sensitive traffic, or mean throughput corresponding to a TID corresponding to a last non-delay sensitive traffic.

In some embodiments, the buffer status information corresponding to the non-delay sensitive traffic includes at least one of: buffer status information of an affiliated STA with the non-delay sensitive traffic among affiliated STAs of at least one Non-AP MLD associated with the AP MLD, or buffer status information of an affiliated AP with the non-delay sensitive traffic among affiliated APs of the AP MLD.

Herein, the at least one Non-AP MLD includes the Non-AP MLD.

In some embodiments, the buffer status information includes at least one of: a number of TIDs corresponding to the non-delay sensitive traffic in a buffer status, a queue size of a data frame corresponding to TIDs corresponding to the non-delay sensitive traffic in a buffer status, or a proportion of a data frame corresponding to TIDs corresponding to the non-delay sensitive traffic in a buffer status.

In some embodiments, the BSS load information corresponding to the non-delay sensitive traffic includes at least one of: a number of STAs associated with a TID corresponding to the non-delay sensitive traffic, a channel bandwidth utilization of a master link, a channel bandwidth utilization of a slave link, a frequency remaining utilization, or a spatial stream remaining utilization.

In some embodiments, the data frame transmission rate information corresponding to the non-delay sensitive traffic includes at least one of: a data frame transmission rate of an STA with the non-delay sensitive traffic among affiliated STAs of at least one Non-AP MLD associated with the AP MLD, a data frame transmission rate of an affiliated AP with the non-delay sensitive traffic among affiliated APs of the AP MLD, or a data frame transmission rate of each AC of ACs corresponding to the non-delay sensitive traffic.

Herein, the at least one Non-AP MLD includes the Non-AP MLD.

In some embodiments, the data frame transmission rate is determined based on a data frame transmission rate variation curve within a second duration.

In some embodiments, the communication unit 510 is specifically configured to:
in a case where throughput information corresponding to a mapping scheme indicated by the TID-to-link mapping information meets a second preset condition, receive the first information.

In some embodiments, whether the throughput information corresponding to the mapping scheme indicated by the TID-to-link mapping information meets the second preset condition, is determined according to a second period.

In some embodiments, the second period is agreed upon by a protocol, or the second period is determined by the AP MLD.

In some embodiments, the case where the throughput information corresponding to the mapping scheme indicated by the TID-to-link mapping information meets the second preset condition, includes:
throughput of a link mapped to each TID indicated by the TID-to-link mapping information being greater than or equal to a second threshold, or mean throughput of links mapped to all TIDs indicated by the TID-to-link mapping information being greater than or equal to a second threshold.

In some embodiments, the second threshold is agreed upon by a protocol, or the second threshold is determined by the AP MLD.

In some embodiments, the multi-link parameter information corresponding to the AP MLD includes at least one of: identifiers of n links, a frequency corresponding to each link of n links, a channel bandwidth corresponding to each link of n links, a number of spatial streams corresponding to each link of n links, or a link quality corresponding to each link of n links.

Herein, the n links are links established between at least one Non-AP MLD associated with the AP MLD and the AP MLD, the at least one Non-AP MLD includes the Non-AP MLD, and n is a positive integer.

In some embodiments, before the Non-AP MLD receives the first information, the communication unit 510 is further configured to send second information, where the second information is used to request the TID-to-link mapping information.

In some embodiments, the second information is carried by one of: a beacon frame, a probe request frame, an association request frame, or a re-association request frame.

In some embodiments, the first information is carried by one of: a beacon frame, a probe response frame, an association response frame, or a re-association response frame.

In some embodiments, the communication unit mentioned above may be a communication interface or a transceiver, or an input/output interface of a communication chip or a system on chip. The processing unit mentioned above may be one or more processors.

It should be understood that the Non-AP MLD 500 according to the embodiments of the present disclosure may correspond to the Non-AP MLD in the method embodiments of the present disclosure, and the above and other operations and/or functions of each unit in the Non-AP MLD 500 are respectively for implementing the corresponding procedure of the Non-AP MLD in the method 300 shown in FIG. 16, which will not be repeated here for the sake of brevity.

FIG. 19 is a schematic structural diagram of a communication device 600 provided in the embodiments of the present disclosure. The communication device 600 shown in FIG. 19 includes a processor 610, and the processor 610 may call and run a computer program from a memory to implement the method in the embodiments of the present disclosure.

In some embodiments, as shown in FIG. 19, the communication device 600 may further include a memory 620. The processor 610 may call and run a computer program from the memory 620 to implement the method in the embodiments of the present disclosure.

Herein, the memory 620 may be a separate device independent of the processor 610, or may be integrated into the processor 610.

In some embodiments, as shown in FIG. 19, the communication device 600 may further include a transceiver 630, and the processor 610 may control the transceiver 630 to communicate with other devices, specifically, to be capable of sending information or data to other devices, or receiving information or data sent by other devices.

Herein, the transceiver 630 may include a transmitter and a receiver. The transceiver 630 may further include an antenna, and the number of antennas may be one or more.

In some embodiments, the processor 610 may implement a function of a processing unit in the Non-AP MLD, or the processor 610 may implement a function of the processing unit in the AP MLD, which will not be repeated for brevity.

In some embodiments, the transceiver 630 may implement a function of the communication unit in the Non-AP MLD, which will not be repeated here for the sake of brevity.

In some embodiments, the transceiver 630 may implement a function of the communication unit in the AP MLD, which will not be repeated here for the sake of brevity.

In some embodiments, the communication device 600 may specifically be the AP MLD of the embodiments of the present disclosure, and the communication device 600 may implement the corresponding procedure implemented by the AP MLD in each method of the embodiments of the present disclosure, which will not be repeated here for the sake of brevity.

In some embodiments, the communication device 600 may specifically be the Non-AP MLD of the embodiments of the present disclosure, and the communication device 600 may implement the corresponding procedure implemented by the Non-AP MLD in each method of the embodiments of the present disclosure, which will not be repeated here for the sake of brevity.

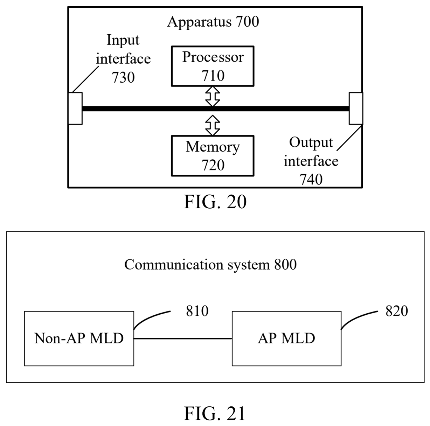

FIG. 20 is a schematic structural diagram of an apparatus in the embodiments of the present disclosure. The apparatus 700 shown in FIG. 20 includes a processor 710, and the processor 710 may call and run a computer program from a memory to implement the method in the embodiments of the present disclosure.

In some embodiments, as shown in FIG. 20, the apparatus 700 may further include a memory 720. The processor 710 may call and run a computer program from the memory 720 to implement the method in the embodiments of the present disclosure.

The memory 720 may be a separate device independent of the processor 710, or may be integrated into the processor 710.

In some embodiments, the processor 710 may implement a function of a processing unit in the Non-AP MLD, or the processor 710 may implement a function of the processing unit in the AP MLD, which will not be repeated here for the sake of brevity.

In some embodiments, the apparatus 700 may further include an input interface 730. The processor 710 may control the input interface 730 to communicate with other devices or chips, and specifically, to be capable of obtaining information or data sent by other devices or chips. Optionally, the processor 710 may be located inside a chip or outside a chip.

In some embodiments, the input interface 730 may implement a function of the communication unit in the Non-AP MLD, or the input interface 730 may implement a function of the communication unit in the AP MLD.

In some embodiments, the apparatus 700 may further include an output interface 740. The processor 710 may control the output interface 740 to communicate with other devices or chips, and specifically, to be capable of outputting information or data to other devices or chips. Optionally, the processor 710 may be located inside a chip or outside a chip.

In some embodiments, the output interface 740 may implement a function of the communication unit in the Non-AP MLD, or the output interface 740 may implement a function of the communication unit in the AP MLD.

In some embodiments, the apparatus may be applied to the AP MLD in the embodiments of the present disclosure, and the apparatus may implement the corresponding procedure implemented by the AP MLD in each method of the embodiments of the present disclosure, which will not be repeated here for the sake of brevity.

In some embodiments, the apparatus may be applied to the Non-AP MLD in the embodiments of the present disclosure, and the apparatus may implement the corresponding procedure implemented by the Non-AP MLD in each method of the embodiments of the present disclosure, which will not be repeated here for the sake of brevity.

In some embodiments, the apparatus mentioned in the embodiments of the present disclosure may also be a chip. For example, it may be a system on chip, a system chip, a chip system, or a system-on-a-chip, etc.

FIG. 21 is a schematic block diagram of a communication system 800 provided in the embodiments of the present disclosure. As shown in FIG. 21, the communication system 800 includes a Non-AP MLD 810 and an AP MLD 820.

Herein, the Non-AP MLD 810 may be configured to implement the corresponding functions implemented by the Non-AP MLD in the above method, and the AP MLD 820 may be configured to implement the corresponding functions implemented by the AP MLD in the above method, which will not be repeated here for the sake of brevity.

It should be understood that the processor of the embodiments of the present disclosure may be an integrated circuit chip with signal processing capabilities. In the implementation process, each step of the above method embodiments may be completed by an integrated logic circuit of hardware in the processor or instructions in the form of software. The above-mentioned processor may be a general-purpose processor, a digital signal processor (DSP), an application specific integrated circuit (ASIC), a field programmable gate array (FPGA) or other programmable logic devices, discrete gate or transistor logic devices, or discrete hardware components. The various methods, steps and logic block diagrams in the embodiments of the present disclosure may be implemented or executed. The general purpose processor may be a microprocessor, or the processor may be any conventional processor or the like. The steps of the method disclosed in conjunction with the embodiments of the present disclosure may be directly embodied as being executed and completed by a hardware coding processor, or executed and completed by a combination of hardware and software modules in the coding processor. The software module may be located in a random access memory, a flash memory, a read-only memory, a programmable read-only memory, or an electrically erasable programmable memory, a register, or other mature storage media in the art. The storage medium is located in the memory, and the processor reads information in the memory and completes the steps of the above method in combination with its hardware.

It can be understood that the memory in the embodiments of the present disclosure may be a volatile memory or a non-volatile memory, or may include both the volatile memory and the non-volatile memory. Herein, the non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be Random Access Memory (Random Access Memory, RAM), which acts as external cache memory. By way of an example but not a limited illustration, many forms of RAMs are available, such as static RAM (Static RAM, SRAM), dynamic random access memory (Dynamic RAM, DRAM), synchronous dynamic random access memory (Synchronous DRAM, SDRAM), double data rate synchronous dynamic random access memory (Double Data Rate SDRAM, DDR SDRAM), enhanced synchronous dynamic random access memory (Enhanced SDRAM, ESDRAM), synchlink dynamic random access memory (Synchlink DRAM, SLDRAM), and direct rambus random access memory (Direct Rambus RAM, DR RAM). It should be noted that the memory of the system and method described herein is intended to include, but be not limited to, these and any other suitable types of memories.

It should be understood that the above-mentioned memory is exemplary but not limited illustrative, and for example, the memory in the embodiments of the present disclosure may also be static random access memory (static RAM, SRAM), dynamic random access memory (dynamic RAM, DRAM), synchronous dynamic random access memory (synchronous DRAM, SDRAM), double data rate synchronous dynamic random access memory (double data rate SDRAM, DDR SDRAM), enhanced synchronous dynamic random access memory (enhanced SDRAM, ESDRAM), synch link dynamic random access memory (synch link DRAM, SLDRAM) and direct rambus random access memory (Direct Rambus RAM, DR RAM), etc. That is, the memory in the embodiments of the present disclosure is intended to include but be not limited to these and any other suitable types of memories.

The embodiments of the present disclosure also provide a computer-readable storage medium for storing a computer program.

In some embodiments, the computer-readable storage medium may be applied to the AP MLD in the embodiments of the present disclosure, and the computer program enables the computer to execute the corresponding procedure implemented by the AP MLD in the various methods of the embodiments of the present disclosure, which will not be repeated here for the sake of brevity.

In some embodiments, the computer-readable storage medium may be applied to the Non-AP MLD in the embodiments of the present disclosure, and the computer program enables the computer to execute the corresponding procedure implemented by the Non-AP MLD in the various methods of the embodiments of the present disclosure, which will not be repeated here for the sake of brevity.

The embodiments of the present disclosure also provide a computer program product, including computer program instructions.

In some embodiments, the computer program product may be applied to the AP MLD in the embodiments of the present disclosure, and the computer program instructions enable the computer to execute the corresponding procedure implemented by the AP MLD in the various methods of the embodiments of the present disclosure, which will not be repeated here for the sake of brevity.

In some embodiments, the computer program product may be applied to the Non-AP MLD in the embodiments of the present disclosure, and the computer program instructions enable the computer to execute the corresponding procedure implemented by the Non-AP MLD in the various methods of the embodiments of the present disclosure, which will not be repeated here for the sake of brevity.

The embodiments of the present disclosure also provide a computer program.

In some embodiments, the computer program may be applied to the AP MLD in the embodiments of the present disclosure, and when the computer program runs on a computer, the computer is enabled to execute the corresponding procesure implemented by the AP MLD in the various methods of the embodiments of the present disclosure, which will not be repeated here for the sake of brevity.

In some embodiments, the computer program may be applied to the Non-AP MLD in the embodiments of the present disclosure, and when the computer program runs on a computer, the computer is enabled to execute the corresponding procesure implemented by the Non-AP MLD in the various methods of the embodiments of the present disclosure, which will not be repeated here for the sake of brevity.

Those ordinary skilled in the art can recognize that the units and algorithm steps of each example described in conjunction with the embodiments disclosed herein can be implemented by electronic hardware, or a combination of computer software and electronic hardware. Whether these functions are performed in the form of hardware or software, depends on the specific applications and design constraints of the technical solutions. Professional technicians may use different methods to implement the described functions for each specific application, but such implementation should not be considered to be beyond the scope of the present disclosure.

Those skilled in the art can clearly understand that, for the convenience and brevity of description, the specific working processes of the system, apparatus and units described above may refer to the corresponding processes in the aforementioned method embodiments, which will not be repeated here.

In several embodiments provided in the present disclosure, it should be understood that the disclosed systems, apapratus, and methods may be implemented in other ways. For example, the apapratus embodiments described above are merely schematic, and for example, the division of the units is merely a logical functional division, and there may be other division methods in actual implementations, and for example, multiple units or components may be combined or integrated into another system, or some features may be ignored or not executed. Another point is that the mutual coupling or direct coupling or communication connection shown or discussed may be an indirect coupling or communication connection through some interface, apparatus or unit, which may be electrical, mechanical, or in other forms.

The units described as separate components may or may not be physically separated, and the components shown as units may or may not be physical units, that is, they may be located in one place or distributed over multiple network units. Part or all of the units may be selected according to actual needs to achieve the purpose of the solution of the embodiment.

In addition, each functional unit in each embodiment of the present disclosure may be integrated into one processing unit, or each unit may exist physically separately, or two or more units may be integrated into one unit.

If the described function is implemented in the form of the software functional unit and sold or used as an independent product, they may be stored in a computer-readable storage medium. For such an understanding, the technical solution of the present disclosure essentially, or a part of the technical solution of the present disclosure that contributes to the prior art, or a part of the technical solution, may be embodied in the form of a software product, and the computer software product is stored in a storage medium and includes several instructions for enabling a computer device (which may be a personal computer, a server, or an AP MLD, etc.) to perform all or part of the steps of the method described in each embodiment of the present disclosure. The aforementioned storage medium includes: a U disk, a mobile hard disk, a read-only memory (ROM), a random access memory (RAM), magnetic disk or optical disk, or other media that may store program codes.

The above description is only specific implementations of the present disclosure, but the protection scope of the present disclosure is not limited thereto, and any technician familiar with this technical field may easily think of changes or substitutions within the technical scope disclosed in the present disclosure, all of which should be included in the protection scope of the present disclosure. Therefore, the protection scope of the present disclosure shall be based on the protection scope of the claims.

## Claims

1. A wireless communication method, comprising:
determining, by an access point multi-link device (AP MLD), traffic identifier (TID)-to-link mapping information via a first network model;
wherein the TID-to-link mapping information is used to indicate a link to which each TID of multiple TIDs is mapped.

2. The method according to claim 1, wherein
the multiple TIDs comprise at least one of: a TID corresponding to a traffic to be transmitted by at least one non-access point multi-link device (Non-AP MLD) associated with the AP MLD, or a TID corresponding to a traffic to be transmitted by the AP MLD.

3. The method according to claim 1 or 2, wherein
the multiple TIDs are TIDs corresponding to a delay sensitive traffic, or the multiple TIDs are TIDs corresponding to a non-delay sensitive traffic.

4. The method according to claim 3, wherein
in a case where the multiple TIDs are TIDs corresponding to the delay sensitive traffic, determining, by the AP MLD, the TID-to-link mapping information via the first network model, comprises:
inputting, by the AP MLD, a first dataset into the first network model, which outputs the TID-to-link mapping information;
wherein the first dataset comprises at least one of: buffer status information corresponding to the delay sensitive traffic, channel load information of a master link, transmission delay bound information associated with a TID corresponding to the delay sensitive traffic, mean data rate information associated with a TID, multi-link parameter information corresponding to the AP MLD, basic service set (BSS) load information corresponding to the delay sensitive traffic, data frame transmission rate information corresponding to the delay sensitive traffic, or mean arrival delay corresponding to a TID corresponding to a last delay sensitive traffic.

5. The method according to claim 4, wherein
the buffer status information corresponding to the delay sensitive traffic comprises at least one of: buffer status information of an affiliated station (STA) with the delay sensitive traffic among affiliated STAs of at least one Non-AP MLD associated with the AP MLD, or buffer status information of an affiliated access point (AP) with the delay sensitive traffic among affiliated APs of the AP MLD.

6. The method according to claim 5, wherein the buffer status information comprises at least one of: a number of TIDs corresponding to the delay sensitive traffic in a buffer status, a queue size of a data frame corresponding to TIDs corresponding to the delay sensitive traffic in a buffer status, or a proportion of a data frame corresponding to TIDs corresponding to the delay sensitive traffic in a buffer status.

7. The method according to claim 4, wherein the BSS load information corresponding to the delay sensitive traffic comprises at least one of: a number of STAs associated with a TID corresponding to the delay sensitive traffic, a channel bandwidth utilization of a master link, a channel bandwidth utilization of a slave link, a frequency remaining utilization, or a spatial stream remaining utilization.

8. The method according to claim 4, wherein
the data frame transmission rate information corresponding to the delay sensitive traffic comprises at least one of: a data frame transmission rate of an STA with the delay sensitive traffic among affiliated STAs of at least one Non-AP MLD associated with the AP MLD, a data frame transmission rate of an affiliated AP with the delay sensitive traffic among affiliated APs of the AP MLD, or a data frame transmission rate of each access category (AC) of ACs corresponding to the delay sensitive traffic.

9. The method according to claim 8, wherein
the data frame transmission rate is determined based on a data frame transmission rate variation curve within a first duration.

10. The method according to any one of claims 4 to 9, wherein
the multiple TIDs are sequentially mapped to part or all of n links in descending order of link qualities, or the multiple TIDs are prioritized to mapped to part or all of n links, or the multiple TIDs are sequentially mapped to part or all of n links in descending order of numbers of spatial streams corresponding to the links, or the multiple TIDs are sequentially mapped to part or all of n links in descending order of spatial stream remaining utilizations corresponding to the links;
wherein the n links are links established between at least one Non-AP MLD associated with the AP MLD and the AP MLD, and n is a positive integer.

11. The method according to claim 10, wherein
a TID corresponding to the non-delay sensitive traffic is mapped to a link to which the multiple TIDs are not mapped among the n links; or,
a TID corresponding to the non-delay sensitive traffic is mapped to part or all of the n links after the multiple TIDs are mapped to corresponding links and transmissions are completed.

12. The method according to any one of claims 4 to 11, wherein the method further comprises:
mapping, by the AP MLD, a TID corresponding to a traffic to be transmitted by the AP MLD among the multiple TIDs to a corresponding link according to the TID-to-link mapping information, and/or, sending first information by the AP MLD, wherein the first information comprises the TID-to-link mapping information.

13. The method according to any one of claims 4 to 11, wherein the method further comprises:
in a case where a transmission delay corresponding to a mapping scheme indicated by the TID-to-link mapping information meets a first preset condition, mapping, by the AP MLD, a TID corresponding to a traffic to be transmitted by the AP MLD among the multiple TIDs to a corresponding link according to the TID-to-link mapping information, and/or, sending first information by the AP MLD, wherein the first information comprises the TID-to-link mapping information; and/or,
in a case where a transmission delay corresponding to a mapping scheme indicated by the TID-to-link mapping information does not meet a first preset condition, re-predicting, by the AP MLD, the TID-to-link mapping information via the first network model, or re-training, by the AP MLD, the first network model, or switching, by the AP MLD, from the first network model to another network model that implements a same function as the first network model.

14. The method according to claim 13, wherein the method further comprises:
determining, by the AP MLD, whether the transmission delay corresponding to the mapping scheme indicated by the TID-to-link mapping information meets the first preset condition, according to a first period.

15. The method according to claim 14, wherein
the first period is agreed upon by a protocol, or the first period is determined by the AP MLD.

16. The method according to any one of claims 13 to 15, wherein
the case where the transmission delay corresponding to the mapping scheme indicated by the TID-to-link mapping information meets the first preset condition, comprises:
the transmission delay of a link mapped to each TID indicated by the TID-to-link mapping information being less than or equal to a first threshold, or mean transmission delay of links mapped to all TIDs indicated by the TID-to-link mapping information being less than or equal to a first threshold.

17. The method according to claim 16, wherein
the first threshold is agreed upon by a protocol, or the first threshold is determined by the AP MLD.

18. The method according to claim 3, wherein
in a case where the multiple TIDs are TIDs corresponding to the non-delay sensitive traffic, determining, by the AP MLD, the TID-to-link mapping information via the first network model, comprises:
inputting, by the AP MLD, a second dataset into the first network model, which outputs the TID-to-link mapping information;
wherein the second dataset comprises at least one of: buffer status information corresponding to the non-delay sensitive traffic, mean data rate information associated with a TID, multi-link parameter information corresponding to the AP MLD, BSS load information corresponding to the non-delay sensitive traffic, data frame transmission rate information corresponding to the non-delay sensitive traffic, or mean throughput corresponding to a TID corresponding to a last non-delay sensitive traffic.

19. The method according to claim 18, wherein
the buffer status information corresponding to the non-delay sensitive traffic comprises at least one of: buffer status information of an affiliated STA with the non-delay sensitive traffic among affiliated STAs of at least one Non-AP MLD associated with the AP MLD, or buffer status information of an affiliated AP with the non-delay sensitive traffic among affiliated APs of the AP MLD.

20. The method according to claim 19, wherein the buffer status information comprises at least one of: a number of TIDs corresponding to the non-delay sensitive traffic in a buffer status, a queue size of a data frame corresponding to TIDs corresponding to the non-delay sensitive traffic in a buffer status, or a proportion of a data frame corresponding to TIDs corresponding to the non-delay sensitive traffic in a buffer status.

21. The method according to claim 18, wherein the BSS load information corresponding to the non-delay sensitive traffic comprises at least one of: a number of STAs associated with a TID corresponding to the non-delay sensitive traffic, a channel bandwidth utilization of a master link, a channel bandwidth utilization of a slave link, a frequency remaining utilization, or a spatial stream remaining utilization.

22. The method according to claim 18, wherein
the data frame transmission rate information corresponding to the non-delay sensitive traffic comprises at least one of: a data frame transmission rate of an STA with the non-delay sensitive traffic among affiliated STAs of at least one Non-AP MLD associated with the AP MLD, a data frame transmission rate of an affiliated AP with the non-delay sensitive traffic among affiliated APs of the AP MLD, or a data frame transmission rate of each AC of ACs corresponding to the non-delay sensitive traffic.

23. The method according to claim 22, wherein
the data frame transmission rate is determined based on a data frame transmission rate variation curve within a second duration.

24. The method according to any one of claims 18 to 23, wherein the method further comprises:
mapping, by the AP MLD, a TID corresponding to a traffic to be transmitted by the AP MLD among the multiple TIDs to a corresponding link according to the TID-to-link mapping information, and/or, sending first information by the AP MLD, wherein the first information comprises the TID-to-link mapping information.

25. The method according to any one of claims 18 to 23, wherein the method further comprises:
in a case where throughput information corresponding to a mapping scheme indicated by the TID-to-link mapping information meets a second preset condition, mapping, by the AP MLD, a TID corresponding to a traffic to be transmitted by the AP MLD among the multiple TIDs to a corresponding link according to the TID-to-link mapping information, and/or, sending first information by the AP MLD, wherein the first information comprises the TID-to-link mapping information; and/or,
in a case where throughput information corresponding to a mapping scheme indicated by the TID-to-link mapping information does not meet a second preset condition, re-predicting, by the AP MLD, the TID-to-link mapping information via the first network model, or re-training, by the AP MLD, the first network model, or switching, by the AP MLD, from the first network model to another network model that implements a same function as the first network model.

26. The method according to claim 25, wherein the method further comprises:
determining, by the AP MLD, whether the throughput information corresponding to the mapping scheme indicated by the TID-to-link mapping information meets the second preset condition, according to a second period.

27. The method according to claim 26, wherein
the second period is agreed upon by a protocol, or the second period is determined by the AP MLD.

28. The method according to any one of claims 25 to 27, wherein
the case where the throughput information corresponding to the mapping scheme indicated by the TID-to-link mapping information meets the second preset condition, comprises:
throughput of a link mapped to each TID indicated by the TID-to-link mapping information being greater than or equal to a second threshold, or mean throughput of links mapped to all TIDs indicated by the TID-to-link mapping information being greater than or equal to a second threshold.

29. The method according to claim 28, wherein
the second threshold is agreed upon by a protocol, or the second threshold is determined by the AP MLD.

30. The method according to any one of claims 12 to 17, 24 to 29, wherein
before sending the first information by the AP MLD, the method further comprises:
receiving second information by the AP MLD, wherein the second information is used to request the TID-to-link mapping information.

31. The method according to claim 30, wherein
the second information is carried by one of: a beacon frame, a probe request frame, an association request frame, or a re-association request frame.

32. The method according to any one of claims 12 to 17, 24 to 31, wherein
the first information is carried by one of: a beacon frame, a probe response frame, an association response frame, or a re-association response frame.

33. The method according to any one of claims 4 to 32, wherein
the multi-link parameter information corresponding to the AP MLD comprises at least one of: identifiers of n links, a frequency corresponding to each link of n links, a channel bandwidth corresponding to each link of n links, a number of spatial streams corresponding to each link of n links, or a link quality corresponding to each link of n links;
wherein the n links are links established between at least one Non-AP MLD associated with the AP MLD and the AP MLD, and n is a positive integer.

34. The method according to any one of claims 1 to 33, wherein the method further comprises:
re-training, by the AP MLD, the first network model according to a third period; or,
in a case where a new delay sensitive traffic arrives, and/or, in a case where network load and/or channel occupancy changes, re-training, by the AP MLD, the first network model, or switching, by the AP MLD, from the first network model to another network model that implements a same function as the first network model.

35. The method according to claim 34, wherein
the third period is determined based on network load information and/or channel occupancy information.

36. The method according to claim 34, wherein
the third period is agreed upon by a protocol, or the third period is determined by the AP MLD.

37. A wireless communication method, comprising:
receiving first information by a non-access point multi-link device (Non-AP MLD);
wherein the first information comprises traffic identifier (TID)-to-link mapping information, the TID-to-link mapping information is used to indicate a link to which each TID of multiple TIDs is mapped, the multiple TIDs at least comprise a TID corresponding to a traffic to be transmitted by the Non-AP MLD, and the TID-to-link mapping information is determined by an access point multi-link device (AP MLD) via a first network model.

38. The method according to claim 37, wherein
the multiple TIDs further comprise at least one of: a TID corresponding to a traffic to be transmitted by at least one other Non-AP MLD associated with the AP MLD, or a TID corresponding to a traffic to be transmitted by the AP MLD.

39. The method according to claim 37 or 38, wherein
the multiple TIDs are TIDs corresponding to a delay sensitive traffic, or the multiple TIDs are TIDs corresponding to a non-delay sensitive traffic.

40. The method according to claim 39, wherein
in a case where the multiple TIDs are TIDs corresponding to the delay sensitive traffic, an input of the first network model is a first dataset;
wherein the first dataset comprises at least one of: buffer status information corresponding to the delay sensitive traffic, channel load information of a master link, transmission delay bound information associated with a TID corresponding to the delay sensitive traffic, mean data rate information associated with a TID, multi-link parameter information corresponding to the AP MLD, basic service set (BSS) load information corresponding to the delay sensitive traffic, data frame transmission rate information corresponding to the delay sensitive traffic, or mean arrival delay corresponding to a TID corresponding to a last delay sensitive traffic.

41. The method according to claim 40, wherein
the buffer status information corresponding to the delay sensitive traffic comprises at least one of: buffer status information of an affiliated station (STA) with the delay sensitive traffic among affiliated STAs of at least one Non-AP MLD associated with the AP MLD, or buffer status information of an affiliated access point (AP) with the delay sensitive traffic among affiliated APs of the AP MLD;
wherein the at least one Non-AP MLD comprises the Non-AP MLD.

42. The method according to claim 41, wherein the buffer status information comprises at least one of: a number of TIDs corresponding to the delay sensitive traffic in a buffer status, a queue size of a data frame corresponding to TIDs corresponding to the delay sensitive traffic in a buffer status, or a proportion of a data frame corresponding to TIDs corresponding to the delay sensitive traffic in a buffer status.

43. The method according to claim 40, wherein the BSS load information corresponding to the delay sensitive traffic comprises at least one of: a number of STAs associated with a TID corresponding to the delay sensitive traffic, a channel bandwidth utilization of a master link, a channel bandwidth utilization of a slave link, a frequency remaining utilization, or a spatial stream remaining utilization.

44. The method according to claim 40, wherein
the data frame transmission rate information corresponding to the delay sensitive traffic comprises at least one of: a data frame transmission rate of an STA with the delay sensitive traffic among affiliated STAs of at least one Non-AP MLD associated with the AP MLD, a data frame transmission rate of an affiliated AP with the delay sensitive traffic among affiliated APs of the AP MLD, or a data frame transmission rate of each access category (AC) of ACs corresponding to the delay sensitive traffic;
wherein the at least one Non-AP MLD comprises the Non-AP MLD.

45. The method according to claim 44, wherein
the data frame transmission rate is determined based on a data frame transmission rate variation curve within a first duration.

46. The method according to any one of claims 40 to 45, wherein
the multiple TIDs are sequentially mapped to part or all of n links in descending order of link qualities, or the multiple TIDs are prioritized to mapped to part or all of n links, or the multiple TIDs are sequentially mapped to part or all of n links in descending order of numbers of spatial streams corresponding to the links, or the multiple TIDs are sequentially mapped to part or all of n links in descending order of spatial stream remaining utilizations corresponding to the links;
wherein the n links are links established between at least one Non-AP MLD associated with the AP MLD and the AP MLD, the at least one Non-AP MLD comprises the Non-AP MLD, and n is a positive integer.

47. The method according to claim 46, wherein
a TID corresponding to the non-delay sensitive traffic is mapped to a link to which the multiple TIDs are not mapped among the n links; or,
a TID corresponding to the non-delay sensitive traffic is mapped to part or all of the n links after the multiple TIDs are mapped to corresponding links and transmissions are completed.

48. The method according to any one of claims 40 to 47, wherein
receiving the first information by the Non-AP MLD, comprises:
in a case where a transmission delay corresponding to a mapping scheme indicated by the TID-to-link mapping information meets a first preset condition, receiving the first information by the Non-AP MLD.

49. The method according to claim 48, wherein whether the transmission delay corresponding to the mapping scheme indicated by the TID-to-link mapping information meets the first preset condition, is determined according to a first period.

50. The method according to claim 49, wherein
the first period is agreed upon by a protocol, or the first period is determined by the AP MLD.

51. The method according to any one of claims 48 to 50, wherein
the case where the transmission delay corresponding to the mapping scheme indicated by the TID-to-link mapping information meets the first preset condition, comprises:
the transmission delay of a link mapped to each TID indicated by the TID-to-link mapping information being less than or equal to a first threshold, or mean transmission delay of links mapped to all TIDs indicated by the TID-to-link mapping information being less than or equal to a first threshold.

52. The method according to claim 51, wherein
the first threshold is agreed upon by a protocol, or the first threshold is determined by the AP MLD.

53. The method according to claim 39, wherein in a case where the multiple TIDs are TIDs corresponding to the non-delay sensitive traffic, an input of the first network model is a second dataset;
wherein the second dataset comprises at least one of: buffer status information corresponding to the non-delay sensitive traffic, mean data rate information associated with a TID, multi-link parameter information corresponding to the AP MLD, BSS load information corresponding to the non-delay sensitive traffic, data frame transmission rate information corresponding to the non-delay sensitive traffic, or mean throughput corresponding to a TID corresponding to a last non-delay sensitive traffic.

54. The method according to claim 53, wherein
the buffer status information corresponding to the non-delay sensitive traffic comprises at least one of: buffer status information of an affiliated STA with the non-delay sensitive traffic among affiliated STAs of at least one Non-AP MLD associated with the AP MLD, or buffer status information of an affiliated AP with the non-delay sensitive traffic among affiliated APs of the AP MLD;
wherein the at least one Non-AP MLD comprises the Non-AP MLD.

55. The method according to claim 54, wherein the buffer status information comprises at least one of: a number of TIDs corresponding to the non-delay sensitive traffic in a buffer status, a queue size of a data frame corresponding to TIDs corresponding to the non-delay sensitive traffic in a buffer status, or a proportion of a data frame corresponding to TIDs corresponding to the non-delay sensitive traffic in a buffer status.

56. The method according to claim 53, wherein the BSS load information corresponding to the non-delay sensitive traffic comprises at least one of: a number of STAs associated with a TID corresponding to the non-delay sensitive traffic, a channel bandwidth utilization of a master link, a channel bandwidth utilization of a slave link, a frequency remaining utilization, or a spatial stream remaining utilization.

57. The method according to claim 53, wherein
the data frame transmission rate information corresponding to the non-delay sensitive traffic comprises at least one of: a data frame transmission rate of an STA with the non-delay sensitive traffic among affiliated STAs of at least one Non-AP MLD associated with the AP MLD, a data frame transmission rate of an affiliated AP with the non-delay sensitive traffic among affiliated APs of the AP MLD, or a data frame transmission rate of each AC of ACs corresponding to the non-delay sensitive traffic;
wherein the at least one Non-AP MLD comprises the Non-AP MLD.

58. The method according to claim 57, wherein
the data frame transmission rate is determined based on a data frame transmission rate variation curve within a second duration.

59. The method according to any one of claims 53 to 58, wherein
receiving the first information by the Non-AP MLD, comprises:
in a case where throughput information corresponding to a mapping scheme indicated by the TID-to-link mapping information meets a second preset condition, receiving the first information by the Non-AP MLD.

60. The method according to claim 59, wherein whether the throughput information corresponding to the mapping scheme indicated by the TID-to-link mapping information meets the second preset condition, is determined according to a second period.

61. The method according to claim 60, wherein
the second period is agreed upon by a protocol, or the second period is determined by the AP MLD.

62. The method according to any one of claims 59 to 61, wherein
the case where the throughput information corresponding to the mapping scheme indicated by the TID-to-link mapping information meets the second preset condition, comprises:
throughput of a link mapped to each TID indicated by the TID-to-link mapping information being greater than or equal to a second threshold, or mean throughput of links mapped to all TIDs indicated by the TID-to-link mapping information being greater than or equal to a second threshold.

63. The method according to claim 62, wherein
the second threshold is agreed upon by a protocol, or the second threshold is determined by the AP MLD.

64. The method according to any one of claims 40 to 63, wherein
the multi-link parameter information corresponding to the AP MLD comprises at least one of: identifiers of n links, a frequency corresponding to each link of n links, a channel bandwidth corresponding to each link of n links, a number of spatial streams corresponding to each link of n links, or a link quality corresponding to each link of n links;
wherein the n links are links established between at least one Non-AP MLD associated with the AP MLD and the AP MLD, the at least one Non-AP MLD comprises the Non-AP MLD, and n is a positive integer.

65. The method according to any one of claims 37 to 64, wherein
before receiving the first information by the Non-AP MLD, the method further comprises:
sending second information by the Non-AP MLD, wherein the second information is used to request the TID-to-link mapping information.

66. The method according to claim 65, wherein
the second information is carried by one of: a beacon frame, a probe request frame, an association request frame, or a re-association request frame.

67. The method according to any one of claims 37 to 66, wherein
the first information is carried by one of: a beacon frame, a probe response frame, an association response frame, or a re-association response frame.

68. An access point multi-link device (AP MLD), comprising:
a processing unit, configured to determine traffic identifier (TID)-to-link mapping information via a first network model;
wherein the TID-to-link mapping information is used to indicate a link to which each TID of multiple TIDs is mapped.

69. A non-access point multi-link device (Non-AP MLD), comprising:
a communication unit, configured to receive first information;
wherein the first information comprises traffic identifier (TID)-to-link mapping information, the TID-to-link mapping information is used to indicate a link to which each TID of multiple TIDs is mapped, the multiple TIDs at least comprise a TID corresponding to a traffic to be transmitted by the Non-AP MLD, and the TID-to-link mapping information is determined by an access point multi-link device (AP MLD) via a first network model.

70. An AP MLD , comprising: a processor and a memory, wherein the memory is configured to store a computer program, and the processor is configured to call and run the computer program stored in the memory, to enable the AP MLD to perform the method according to any one of claims 1 to 36.

71. A Non-AP MLD, comprising: a processor and a memory, wherein the memory is configured to store a computer program, and the processor is configured to call and run the computer program stored in the memory, to enable the Non-AP MLD to perform the method according to any one of claims 37 to 67.

72. A chip, comprising: a processor, configured to call and run a computer program from a memory, to enable a device equipped with the chip to perform the method according to any one of claims 1 to 36.

73. A chip, comprising: a processor, configured to call and run a computer program from a memory, to enable a device equipped with the chip to perform the method according to any one of claims 37 to 67.

74. A computer-readable storage medium, configured to store a computer program, wherein when the computer program is executed, the method according to any one of claims 1 to 36 is implemented.

75. A computer-readable storage medium, configured to store a computer program, wherein when the computer program is executed, the method according to any one of claims 37 to 67 is implemented.

76. A computer program product, comprising computer program instructions, wherein when the computer program instructions are executed, the method according to any one of claims 1 to 36 is implemented.

77. A computer program product, comprising computer program instructions, wherein when the computer program instructions are executed, the method according to any one of claims 37 to 67 is implemented.

78. A computer program, wherein when the computer program is executed, the method according to any one of claims 1 to 36 is implemented.

79. A computer program, wherein when the computer program is executed, the method according to any one of claims 37 to 67 is implemented.
